# EUROPEAN PATENT APPLICATION

(11) **EP 4 290 795 A1**
(43) Date of publication of application: **13.12.2023**
(21) Application number: 22762493.9
(22) Date of filing: 28.02.2022
(51) Int. Cl.: H04L 5/00

(54) **METHOD AND APPARATUS FOR RECEIVING PHYSICAL BROADCAST CHANNEL (PBCH)**

(30) Priority: 03.03.2021 CN 202110237240; 19.11.2021 CN 202111401657
(71) Applicant: Huawei Technologies Co., Ltd., Shenzhen, Guangdong 518129 (CN)
(72) Inventor: HOU, Hailong, Shenzhen, Guangdong 518129 (CN); JIN, Zhe, Shenzhen, Guangdong 518129 (CN); SHEN, Zukang, Shenzhen, Guangdong 518129 (CN)
(74) Representative: Isarpatent
(86) International application number: PCT/CN2022/078436
(87) International publication number: WO 2022/184028

(57) **Abstract**

This application relates to the field of communication technologies, and provides a physical broadcast channel PBCH receiving method and apparatus, to improve PBCH information demodulation performance when a bandwidth of a terminal device is less than an SSB bandwidth in an NR system. The method includes: A terminal device separately receives, on time domain resources of at least two physical broadcast channels PBCHs, the PBCHs on different frequency domain resources, where frequency domain resources of the at least two PBCHs are the same; and performs combination processing on the PBCHs received on the different frequency domain resources.

## Description

This application claims priority to Chinese Patent Application No. 202110237240.3, filed with the China National Intellectual Property Administration on March 3, 2021 and entitled "PHYSICAL BROADCAST CHANNEL PBCH RECEIVING METHOD AND APPARATUS", and claims priority to Chinese Patent Application No. 202111401657.5, filed with the China National Intellectual Property Administration on November 19, 2021 and entitled "PHYSICAL BROADCAST CHANNEL PBCH RECEIVING METHOD AND APPARATUS", which are incorporated herein by reference in their entireties.

### TECHNICAL FIELD

This application relates to the field of communication technologies, and in particular, to a physical broadcast channel PBCH receiving method and apparatus.

### BACKGROUND

A fifth generation (fifth generation, 5G) mobile communication technology is also referred to as a new radio (new radio, NR) technology. Services of the NR technology are diverse, and include an enhanced mobile broadband service, an ultra-reliable low-latency communication service, a massive machine-type communication (massive machine-type communication, mMTC) service, and the like. A terminal device related to the mMTC service may be a reduced capability (reduced capability, RedCap) terminal device and an NB narrowband (narrowband, NB) terminal device, for example, an industrial wireless sensor, a video surveillance device, and a wearable device. A channel bandwidth of this type of machine-type terminal device is usually lower than that of a conventional NR terminal device. For example, the channel bandwidth of the conventional NR terminal device is 100 MHz, a channel bandwidth of the NB terminal device may be 20 MHz, and a channel bandwidth of the RedCap terminal device may be 2 MHz, 5 MHz, or 10 MHz.

When accessing a base station, a terminal device in an NR system performs time-frequency synchronization with the base station by receiving a synchronization signal block (synchronization signal block, SSB), and obtains broadcast information. The SSB includes a primary synchronization signal (primary synchronization signal, PSS), a secondary synchronization signal (secondary synchronization signal, SSS), and a physical broadcast channel (physical broadcast channel, PBCH) block. The terminal device may complete the time-frequency synchronization with the base station by using the PSS and the SSS, and may obtain the broadcast information of the base station through the PBCH. The broadcast information includes a master information block (master information block, MIB) from a higher layer, and the like.

In this case, if a frequency domain bandwidth capability of the terminal device is less than a frequency domain bandwidth of the SSB in the NR system, and different frequency domain resources carry different PBCH coding information, the terminal device cannot receive a complete synchronization signal or complete PBCH information, and consequently may fail to access the NR system. For example, if a PBCH bandwidth of an NR base station is 3.6 MHz, and a bandwidth of a narrowband terminal that requests access is 2 MHz, that is, the bandwidth of the terminal is less than the PBCH bandwidth, the terminal can receive only a part of PBCH information instead of complete PBCH information. Consequently, performance of demodulating the PBCH information by the terminal is poor.

### SUMMARY

This application provides a physical broadcast channel PBCH receiving method and apparatus, to resolve a problem in a conventional technology that a PBCH information demodulation performance loss is large when a bandwidth of a terminal device is less than an SSB bandwidth in an NR system.

According to a first aspect, a physical broadcast channel PBCH receiving method is provided. The method is applied to a terminal device and includes: separately receiving, on time domain resources of at least two physical broadcast channels PBCHs, the PBCHs on different frequency domain resources, where frequency domain resources of the at least two PBCHs are the same; and performing combination processing on the PBCHs received on the different frequency domain resources.

In the foregoing technical solution, the terminal device may implement, on different time domain resources through radio frequency re-modulation, frequency hopping on different frequency resources, to receive different PBCHs, and then perform combination processing based on the different received PBCHs, to obtain more information carried on the PBCHs. This effectively improves PBCH demodulation performance, and avoids a problem that a PBCH demodulation information loss is large when a bandwidth of a narrowband terminal device, namely, the terminal device, is less than a PBCH bandwidth, and the narrowband terminal device performs synchronization based on an SSB in an existing NR system. The radio frequency re-modulation is to modulate a frequency domain range in which a radio frequency link operates.

In a possible design, the frequency domain resources of the at least two PBCHs are in one periodicity, and different PBCHs carry same or partially same information.

In the foregoing possible implementation, at least two or more PBCHs in one periodicity carry same information. Therefore, for the narrowband terminal device, more information carried on the PBCHs may be obtained by receiving the some PBCHs on different frequency domain resources at different moments for a plurality of times, and by performing combination processing on the some different the PBCHs. Compared with some PBCHs received on a same frequency domain resource, PBCH demodulation performance after the radio frequency re-modulation is better, and less information is lost.

Further, in a possible design, the at least two or more PBCHs are in one periodicity, and carry same or partially same information.

In a possible design, SSB index values of the at least two or more PBCHs are the same. In the foregoing possible implementation, beamforming directions of PBCHs with a same SSB index value are the same. Therefore, the PBCHs with the same SSB index value have better combination processing performance, PBCH combination decoding performance after the radio frequency re-modulation is better, and less information is lost.

In another possible implementation, SSB index values of the at least two or more PBCHs are different. In the foregoing possible implementation, beamforming directions of PBCHs with different SSB index values are different, and combination processing is performed on PBCHs in different beam directions, so that more information may be obtained, PBCH combination processing decoding performance is better, information carried on the PBCHs can be obtained more quickly, a detection time is reduced, and power consumption of the terminal device is reduced.

In a possible design, the method further includes: determining a frequency domain resource range for receiving each PBCH.

In the foregoing possible implementation, the terminal device may determine, based on an actual requirement, a moment at which the radio frequency re-modulation is performed, and perform radio frequency re-modulation to modulate the frequency domain resource range for receiving each PBCH, to receive the some PBCHs on the different frequency domain resources at the different moments for the plurality of times, and improve PBCH demodulation performance.

In a possible design, the frequency domain resource range includes at least one of a center frequency or an operation bandwidth.

In the foregoing possible implementation, the terminal device performs re-modulation on the frequency domain range in which the radio frequency link operates, to receive the PBCHs on the different frequency domain resources at the different moments, extend frequency domain resource ranges in which the terminal device receives the PBCHs, and improve PBCH demodulation performance.

In a possible design, the determining a frequency domain resource range for receiving each PBCH specifically includes: determining, according to a preset rule, the frequency domain resource range for receiving each PBCH; or determining, based on received configuration signaling, the frequency domain resource range for receiving each PBCH.

In the foregoing possible implementation, specifically according to the preset rule or the received configuration signaling, the terminal device may determine whether to perform radio frequency re-modulation, and determine a frequency domain resource range for the radio frequency re-modulation, so that flexibility of the radio frequency re-modulation is improved.

In a possible design, the determining a frequency domain resource range for receiving each PBCH specifically includes: determining, based on a coverage level or a signal quality level of a received signal, the frequency domain resource range for receiving each PBCH.

In the foregoing possible implementation, specifically according to the coverage level or the signal quality level of the received signal, the terminal device may determine whether to perform radio frequency re-modulation and determine the frequency domain resource range for the radio frequency re-modulation, so that flexibility and real-time performance of the radio frequency re-modulation are improved.

In a possible design, the determining, based on a coverage level or a signal quality level of a received signal, the frequency domain resource range for receiving each PBCH specifically includes: determining, on the basis that a measured reference signal received power RSRP is less than or equal to a preset threshold, the frequency domain resource range for receiving each PBCH.

In the foregoing possible implementation, specifically according to the currently measured RSRP, the terminal device may determine whether to perform radio frequency re-modulation and determine the frequency domain resource range for the radio frequency re-modulation, so that flexibility and real-time performance of the radio frequency re-modulation are improved.

In a possible design, the preset threshold is predefined or preconfigured, or is determined based on the received configuration signaling.

In a possible design, an intersection set of the different frequency domain resources is smallest, and/or a union set of the different frequency domain resources is largest.

In the foregoing possible implementation, that the terminal device determines a plurality of frequency domain resources for the radio frequency re-modulation may satisfy: An intersection set of the plurality of frequency domain resources is smallest, so that the information carried on the PBCHs that are received for the plurality of times is low in repetition; and a union set of the plurality of frequency domain resources is largest, so that a maximum frequency domain resource range of the PBCHs is included as much as possible, to obtain more information carried on the PBCHs, and improve PBCH demodulation performance.

In a possible design, the union set of the different frequency domain resources includes at least all frequency domain resources of the PBCHs.

In the foregoing possible implementation, that the terminal device determines a plurality of frequency domain resources for the radio frequency re-modulation may satisfy: The union set of the different frequency domain resources includes at least all frequency domain resources of the PBCHs, so that all information carried on the PBCHs can be obtained through combination processing based on the PBCHs that are received for the plurality of times, and the demodulation loss is reduced.

In a possible design, the performing combination processing on the PBCHs received on the different frequency domain resources specifically includes: demodulating the at least two received PBCHs to obtain at least two pieces of demodulation information; and performing channel decoding after combining the at least two pieces of demodulation information, to obtain the information carried on the PBCHs.

In the foregoing possible implementation, after receiving the different PBCHs, the terminal device may combine the information obtained by demodulating the at least two received PBCHs, and then decode combined demodulation information, to obtain combined PBCH information that is obtained after the radio frequency re-modulation. A PBCH information demodulation performance loss is small.

In a possible design, the performing combination processing on the PBCHs received on the different frequency domain resources specifically includes: performing channel estimation, channel equalization, demodulation, and channel decoding after combining the at least two received PBCHs, to obtain the information carried on the PBCHs.

In the foregoing possible implementation, after receiving the different PBCHs, the terminal device may first combine the different PBCHs, and then perform channel estimation, channel equalization, demodulation, and channel decoding based on combined information, to obtain combined PBCH information that is obtained after the radio frequency re-modulation. A PBCH information demodulation performance loss is small.

In a possible design, before the performing combination processing on the PBCHs received on the different frequency domain resources, the method further includes: performing time-frequency synchronization processing with a network device based on a primary synchronization signal PSS and a secondary synchronization signal SSS that are included in a detected synchronization signal block SSB.

It should be noted that, in an implementation of this application, for the narrowband terminal device, the network device may send, in the conventional technology, the SSB, including a PBCH in the SSB, that is, completely reuse an NR SSB; or the network device may reuse only a PSS and/or an SSS in the NR SSB, and may re-modulate a frequency domain resource range of the PBCH in the SSB. For example, for the narrowband terminal device, the network device modulates a frequency domain resource for sending the PBCH to a small frequency domain range. This is not specifically limited in this embodiment of this application. The solution of this application is applicable to any scenario in which the PBCH bandwidth is greater than the bandwidth of the terminal device, or may be applied to a scenario in which the PBCH bandwidth is less than or equal to the bandwidth of the terminal device.

According to a second aspect, a physical broadcast channel PBCH receiving apparatus is provided. The apparatus includes: a receiving module, configured to separately receive, on time domain resources of at least two physical broadcast channels PBCHs, the PBCHs on different frequency domain resources, where frequency domain resources of the at least two PBCHs are the same; and a processing module, configured to perform combination processing on the PBCHs received on the different frequency domain resources.

In a possible design, the frequency domain resources of the at least two PBCHs are in one periodicity, and different PBCHs carry same information.

Further, in a possible design, SSB index values of the at least two PBCHs are the same.

In another possible design, SSB index values of the at least two PBCHs are different.

In a possible design, the processing module is further configured to determine a frequency domain resource range for receiving each PBCH.

In a possible design, the frequency domain resource range includes at least one of a center frequency or an operation bandwidth.

In a possible design, the processing module is specifically further configured to: determine, according to a preset rule, the frequency domain resource range for receiving each PBCH; or determine, based on received configuration signaling, the frequency domain resource range for receiving each PBCH.

In a possible design, the processing module is specifically further configured to determine, based on a coverage level or a signal quality level of a received signal, the frequency domain resource range for receiving each PBCH.

In a possible design, the processing module is specifically further configured to determine, on the basis that a measured reference signal received power RSRP is less than or equal to a preset threshold, the frequency domain resource range for receiving each PBCH.

In a possible design, the preset threshold is predefined or preconfigured, or is determined based on the received configuration signaling.

In a possible design, an intersection set of the different frequency domain resources is smallest, and/or a union set of the different frequency domain resources is largest.

In a possible design, the union set of the different frequency domain resources includes at least all frequency domain resources of the PBCHs.

In a possible design, the processing module is specifically configured to: demodulate the at least two received PBCHs to obtain at least two pieces of demodulation information; and perform channel decoding after combining the at least two pieces of demodulation information, to obtain information carried on the PBCHs.

In a possible design, the processing module is specifically further configured to perform channel estimation, channel equalization, demodulation, and channel decoding after combining the at least two received PBCHs, to obtain information carried on the PBCHs.

In a possible design, the processing module is further configured to perform time-frequency synchronization processing with a network device based on a primary synchronization signal PSS and a secondary synchronization signal SSS that are included in a detected synchronization signal block SSB.

According to a third aspect, an electronic device is provided. The electronic device includes a processor and a transmission interface, where the processor is configured to execute instructions stored in a memory, to implement the method according to any one of the first aspect.

According to a fourth aspect, a computer-readable storage medium is provided. The computer-readable storage medium stores instructions; and when the instructions are executed by a computer or a processor, the computer or the processor is enabled to perform the method according to any one of the first aspect.

According to a fifth aspect, a computer program product is provided. The computer program product may include program instructions; and when the computer program product runs on a computer, the computer is enabled to perform the method according to any one of the first aspect.

It may be understood that any one of the physical broadcast channel PBCH receiving apparatus, the electronic device, the computer-readable storage medium, and the computer program product provided above may be configured to perform the corresponding method provided above. Therefore, for beneficial effects that can be achieved by the physical broadcast channel PBCH receiving apparatus, the electronic device, the computer-readable storage medium, and the computer program product, refer to beneficial effects in the corresponding method provided above. Details are not described herein again.

According to a sixth aspect, a downlink channel transmission method is provided, and is applied to a terminal device. The method includes: separately receiving, on time domain resources of at least two first channels, some first channels on different frequency domain resources; and performing combination processing on the some first channels received on the different frequency domain resources.

In the foregoing technical solution, the terminal device may implement, through radio frequency re-modulation, frequency hopping on different frequency resources at different moments, to receive some different downlink channels, and then perform combination processing based on the some different received downlink channels, to obtain all information carried on the downlink channel. This effectively improves downlink channel demodulation performance of a narrowband terminal device.

In a possible design, the at least two first channels carry same information.

In a possible design, a maximum channel bandwidth of the terminal device is less than a bandwidth of any one of the at least two first channels.

In a possible design, the at least two first channels are at least two first PDCCHs, and the at least two first PDCCHs are used to carry same downlink control information DCI for scheduling a system information block SIB.

In a possible design, aggregation levels ALs of the at least two first PDCCHs are the same.

In a possible design, control channel elements CCEs forming the at least two first PDCCHs are the same.

In a possible design, the at least two first channels are at least two first PDSCHs, and the at least two first PDSCHs are used to carry a same system information block SIB.

In a possible design, scheduling information of the two first PDSCHs is carried in downlink control information DCI of a first PDCCH.

In a possible design, scheduling information of the first PDSCH is carried in downlink control information DCI of a second PDCCH, a bandwidth of the second PDCCH is less than or equal to the maximum channel bandwidth of the terminal device, and/or a bandwidth of a control resource set for transmitting the second PDCCH is less than or equal to the maximum channel bandwidth of the terminal device.

In a possible design, the method further includes: receiving first information from a network device, where the first information is used to indicate that the at least two first channels carry the same information.

In a possible design, the first information is carried in a synchronization signal block SSB, a system information block SIB, radio resource control RRC signaling, a media access control control element MAC CE, downlink control information DCI, or a physical broadcast channel PBCH.

In a possible design, that the first information is carried in a synchronization signal block SSB includes: The first information is carried in a master information block MIB and/or an additional payload of the PBCH.

In a possible design, the method further includes: determining a frequency domain resource range for receiving each first channel.

In a possible design, the frequency domain resource range includes at least one of a center frequency or an operation bandwidth.

In a possible design, the determining a frequency domain resource range for receiving each first channel specifically includes: determining, according to a preset rule, the frequency domain resource range for receiving each first channel; or determining, based on received configuration signaling, the frequency domain resource range for receiving each first channel.

In a possible design, the determining a frequency domain resource range for receiving each first channel specifically includes: determining, based on a coverage level or a signal quality level of a received signal, the frequency domain resource range for receiving each first channel.

In a possible design, the determining, based on a coverage level or a signal quality level of a received signal, the frequency domain resource range for receiving each first channel specifically includes: determining, on the basis that a measured reference signal received power RSRP is less than or equal to a preset threshold, the frequency domain resource range for receiving each first channel.

In a possible design, an intersection set of the different frequency domain resources is smallest, and/or a union set of the different frequency domain resources is largest.

In a possible design, the union set of the different frequency domain resources includes at least all frequency domain resources of the first channels.

In a possible design, the performing combination processing on the some first channels received on the different frequency domain resources specifically includes: demodulating the at least two received first channels to obtain at least two pieces of demodulation information; and performing channel decoding after combining the at least two pieces of demodulation information, to obtain information carried on the first channels.

In a possible design, the performing combination processing on the some first channels received on the different frequency domain resources specifically includes: performing channel estimation, channel equalization, demodulation, and channel decoding after combining the at least two received first channels, to obtain the information carried on the first channels.

It should be noted that the downlink channel in this embodiment of this application may not be limited to a channel through which the network device transmits data to the terminal device, and may be extended to another communication channel, for example, a transmission channel between a plurality of terminal devices on a sidelink. This is not specifically limited in this application.

According to a seventh aspect, a downlink channel transmission method is provided, and is applied to a network device. The method includes: sending first information, where the first information is used to indicate that at least two first channels carry same information; and sending the at least two first channels on time-frequency resources of the at least two first channels.

In a possible design, the at least two first channels carry the same information.

In a possible design, the at least two first channels are at least two first PDCCHs, and the at least two first PDCCHs are used to carry same downlink control information DCI for scheduling a system information block SIB.

In a possible design, aggregation levels ALs of the at least two first PDCCHs are the same.

In a possible design, control channel elements CCEs forming the at least two first PDCCHs are the same.

In a possible design, the at least two first channels are at least two first PDSCHs, and the at least two first PDSCHs are used to carry a same system information block SIB.

In a possible design, scheduling information of the two first PDSCHs is carried in downlink control information DCI of a first PDCCHs.

In a possible design, scheduling information of the first PDSCH is carried in downlink control information DCI of a second PDCCH, a bandwidth of the second PDCCH is less than or equal to a maximum channel bandwidth of a terminal device, and/or a bandwidth of a control resource set for transmitting the second PDCCH is less than or equal to the maximum channel bandwidth of the terminal device.

In a possible design, the first information is carried in a synchronization signal block SSB, a system information block SIB, radio resource control RRC signaling, a media access control control element MAC CE, downlink control information DCI, or a physical broadcast channel PBCH.

In a possible design, that the first information is carried in a synchronization signal block SSB includes: The first information is carried in a master information block MIB and/or an additional payload of the PBCH.

It should be noted that the downlink channel in this embodiment of this application may not be limited to a channel through which the network device transmits data to the terminal device, and may be extended to another communication channel, for example, a transmission channel between a plurality of terminal devices on a sidelink. This is not specifically limited in this application.

According to an eighth aspect, an uplink channel transmission method is provided, and is applied to a terminal device. The method includes: determining at least two frequency domain resources; and separately sending, on time domain resources of at least two second channels, some second channels on the at least two frequency domain resources at different moments, where the at least two second channels carry same information.

In the foregoing technical solution, the terminal device may implement, through radio frequency re-modulation, frequency hopping on different frequency resources at different moments, to send some different uplink channels, so that a network device may receive the uplink channel on different frequency domain resources at different moments, and perform combination detection on the uplink channel received at the plurality of moments, to improve uplink channel transmission performance.

In a possible design, a maximum channel bandwidth of the terminal device is less than a bandwidth of any one of the at least two second channels.

In a possible design, the determining at least two frequency domain resources specifically includes: determining at least one of a center frequency or an operation bandwidth for sending the at least two second channels.

In a possible design, the determining at least two frequency domain resources specifically includes: determining, according to a preset rule, a frequency domain resource range for sending each second channel; or determining, based on received configuration signaling, a frequency domain resource range for sending each second channel.

In a possible design, the determining at least two frequency domain resources specifically includes: determining, based on a coverage level or a signal quality level of a received signal, the frequency domain resource range for sending each second channel.

In a possible design, the determining, based on a coverage level or a signal quality level of a received signal, the frequency domain resource range for sending each second channel specifically includes: determining, on the basis that a measured reference signal received power RSRP is less than or equal to a preset threshold, the frequency domain resource range for sending each second channel.

In a possible design, an intersection set of the at least two frequency domain resources is smallest, and/or a union set of the at least two frequency domain resources is largest.

In a possible design, the union set of the at least two frequency domain resources includes at least all frequency domain resources of the second channels.

In a possible design, the method further includes: receiving second information from a network device, where the second information is used to indicate that the at least two second channels carry the same information.

It should be noted that the uplink channel in this embodiment of this application may not be limited to a channel through which the terminal device transmits data to the network device, and may be extended to another communication channel, for example, a transmission channel between a plurality of terminal devices on a sidelink. This is not specifically limited in this application.

According to a ninth aspect, an uplink channel transmission method is provided, and is applied to a network device. The method includes: sending second information, where the second information is used to indicate a terminal device to send at least two second channels on at least two different time domain resources; separately receiving the at least two second channels on the at least two different time domain resources, where the at least two second channels carry same information; and performing combination processing on the second channels received on the different time domain resources.

In a possible design, the performing combination processing on the second channels received on the different time domain resources specifically includes: demodulating the at least two received second channels to obtain at least two pieces of demodulation information; and performing channel decoding after combining the at least two pieces of demodulation information, to obtain information carried on the second channels.

In a possible design, the performing combination processing on the second channels received on the different time domain resources specifically includes: performing channel estimation, channel equalization, demodulation, and channel decoding after combining the at least two received second channels, to obtain information carried on the second channels.

It should be noted that the uplink channel in this embodiment of this application may not be limited to a channel through which the terminal device transmits data to the network device, and may be extended to another communication channel, for example, a transmission channel between a plurality of terminal devices on a sidelink. This is not specifically limited in this application.

According to a tenth aspect, a communication apparatus is provided. The communication apparatus is configured to perform the method according to any one of the sixth aspect.

According to an eleventh aspect, a communication apparatus is provided. The communication apparatus is configured to perform the method according to any one of the seventh aspect.

According to a twelfth aspect, a communication apparatus is provided. The communication apparatus is configured to perform the method according to any one of the eighth aspect.

According to a thirteenth aspect, a communication apparatus is provided. The communication apparatus is configured to perform the method according to any one of the ninth aspect.

According to a fourteenth aspect, an electronic device is provided. The electronic device includes a processor and a transmission interface. The processor is configured to execute instructions stored in a memory, to implement the method according to any one of the sixth aspect.

According to a fifteenth aspect, an electronic device is provided. The electronic device includes a processor and a transmission interface. The processor is configured to execute instructions stored in a memory, to implement the method according to any one of the seventh aspect.

According to a sixteenth aspect, an electronic device is provided. The electronic device includes a processor and a transmission interface. The processor is configured to execute instructions stored in a memory, to implement the method according to any one of the eighth aspect.

According to a seventeenth aspect, an electronic device is provided. The electronic device includes a processor and a transmission interface. The processor is configured to execute instructions stored in a memory, to implement the method according to any one of the ninth aspect.

According to an eighteenth aspect, a computer-readable storage medium is provided. The computer-readable storage medium stores instructions; and when the instructions are executed by a computer or a processor, the computer or the processor is enabled to perform the method according to any one of the sixth aspect.

According to a nineteenth aspect, a computer-readable storage medium is provided. The computer-readable storage medium stores instructions; and when the instructions are executed by a computer or a processor, the computer or the processor is enabled to perform the method according to any one of the seventh aspect.

According to a twentieth aspect, a computer-readable storage medium is provided. The computer-readable storage medium stores instructions; and when the instructions are executed by a computer or a processor, the computer or the processor is enabled to perform the method according to any one of the eighth aspect.

According to a twenty-first aspect, a computer-readable storage medium is provided. The computer-readable storage medium stores instructions; and when the instructions are executed by a computer or a processor, the computer or the processor is enabled to perform the method according to any one of the ninth aspect.

According to a twenty-second aspect, a computer program product is provided. The computer program product may include program instructions; and when the computer program product runs on a computer, the computer is enabled to perform the method according to any one of the sixth aspect.

According to a twenty-third aspect, a computer program product is provided. The computer program product may include program instructions; and when the computer program product runs on a computer, the computer is enabled to perform the method according to any one of the seventh aspect.

According to a twenty-fourth aspect, a computer program product is provided. The computer program product may include program instructions; and when the computer program product runs on a computer, the computer is enabled to perform the method according to any one of the eighth aspect.

According to a twenty-fifth aspect, a computer program product is provided. The computer program product may include program instructions; and when the computer program product runs on a computer, the computer is enabled to perform the method according to any one of the ninth aspect.

According to a twenty-sixth aspect, a communication system is provided. The communication system includes the apparatus according to any one of the tenth aspect and the apparatus according to any one of the eleventh aspect.

According to a twenty-seventh aspect, a communication system is provided. The communication system includes the communication apparatus according to any one of the twelfth aspect and the communication apparatus according to any one of the thirteenth aspect.

It may be understood that any one of the downlink channel transmission method, the uplink channel transmission method, the communication apparatus, the electronic device, the computer-readable storage medium, the computer program product, and the communication system provided above may be configured to perform the corresponding method provided above. Therefore, for beneficial effects that can be achieved by the downlink channel transmission method, the uplink channel transmission method, the communication apparatus, the electronic device, the computer-readable storage medium, the computer program product, and the communication system, refer to beneficial effects in the corresponding method provided above. Details are not described herein again.

### BRIEF DESCRIPTION OF DRAWINGS

FIG. 1 is a schematic diagram of a time-frequency resource for receiving an SSB by a terminal device according to an embodiment of this application;
FIG. 2 is a schematic diagram of a time-frequency resource for receiving an SSB by a narrowband terminal device according to an embodiment of this application;
FIG. 3 is a schematic diagram of an architecture of a communication system according to an embodiment of this application;
FIG. 4 is a schematic diagram of an architecture of a communication apparatus according to an embodiment of this application;
FIG. 5 is a schematic flowchart of a physical broadcast channel PBCH receiving method according to an embodiment of this application;
FIG. 6 is a schematic diagram of a time-frequency resource of a PBCH receiving method according to an embodiment of this application;
FIG. 7 is a schematic diagram of radio frequency re-modulation in a PBCH receiving method according to an embodiment of this application;
FIG. 8 is a schematic flowchart of combination processing in a PBCH receiving method according to an embodiment of this application;
FIG. 9 is a schematic diagram of a time-frequency resource of another PBCH receiving method according to an embodiment of this application;
FIG. 10 is a schematic diagram of a structure of a PBCH receiving apparatus according to an embodiment of this application;
FIG. 11 is a schematic flowchart of a downlink channel or downlink signal transmission method according to an embodiment of this application;
FIG. 12 is a schematic diagram of radio frequency re-modulation in a downlink channel receiving method according to an embodiment of this application;
FIG. 13 is a schematic diagram of radio frequency re-modulation in another downlink channel receiving method according to an embodiment of this application;
FIG. 14 is a schematic diagram of radio frequency re-modulation in another downlink channel receiving method according to an embodiment of this application;
FIG. 15 is a schematic flowchart of an uplink channel or uplink signal transmission method according to an embodiment of this application; and
FIG. 16 is a schematic diagram of a structure of a communication apparatus for uplink channel transmission or uplink signal transmission according to an embodiment of this application.

### DESCRIPTION OF EMBODIMENTS

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of embodiments, unless otherwise specified, "a plurality of" means two or more.

It should be noted that in this application, the word such as "example" or "for example" is used to represent giving an example, an illustration, or a description. Any embodiment or design scheme described as an "example" or "for example" in this application should not be explained as being more preferred or having more advantages than another embodiment or design scheme. To be precise, the word such as "example" or "for example" is intended to present a related concept in a specific manner.

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

First, an application scenario and a related technology of embodiments of this application are briefly described.

In a downlink synchronization process of an NR system, a plurality of SSBs are defined in one half-frame in time domain, and a base station periodically and repeatedly sends the plurality of SSBs in the entire half-frame. The plurality of SSBs are at different time domain positions, are sent through different beams, and have different SSB index values. For example, a default SSB repetition periodicity in an initial access phase is 20 ms, and the SSB repetition periodicity may be further reconfigured after an RRC connected mode is entered.

In a process in which a terminal device performs initial access, the terminal device may search, on a protocol-specified frequency, for a synchronization signal and a physical broadcast channel block that are broadcast by a network device in a cell. The SSB includes a PSS, an SSS, and a physical broadcast channel PBCH.

It should be noted that an existing NR protocol defines a global synchronization grid in all frequency ranges, and divides a licensed spectrum into two frequency ranges (Frequency Ranges, FRs): a licensed spectrum FR 1 and a licensed spectrum FR 2. A frequency range of the FR 1 is 450 MHz to 6 GHz, and a frequency range of the FR 2 is 24 GHz to 52 GHz. The NR protocol specifies a frequency domain synchronization grid of each SSB frequency band, that is, determines frequencies that may appear in an SSB center frequency. Each frequency corresponds to a global synchronization channel number (Global Synchronization Channel Number, GSCN).

After obtaining the SSB through scanning, the terminal device may obtain, by decoding the PBCH, a MIB message and a payload (payload) that is carried on the PBCH.

Information carried on the PBCH of the SSB includes MIB information and additional timing-related information that is added to a physical layer. Content of the MIB information carried on the PBCH is periodically updated. In other words, in information carried on PBCHs of all SSBs that are sent in one MIB periodicity, all information is the same other than a part of timing-related information. For example, if an update periodicity of a MIB is 80 ms, and a periodicity of the SSB is 20 ms, SSBs with a same index value are repeatedly sent for four times in one MIB periodicity.

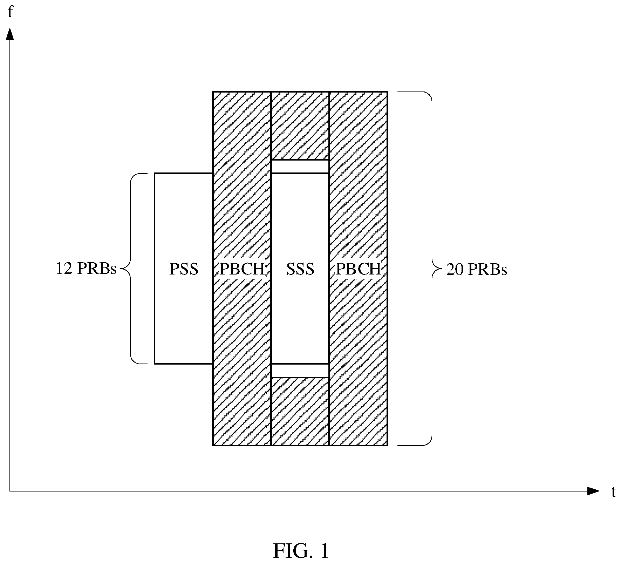

In addition, in the NR system, based on different subcarrier spacings (subcarrier spacings, SCSs), the PSS, the SSS, and the PBCH included in the SSB occupy different frequency domain bandwidths. For example, as shown in FIG. 1, the PSS or the SSS occupies 12 physical resource blocks (physical resource blocks, PRBs) in frequency domain, and the PBCH occupies 20 PRBs in frequency domain.

For an NR frequency range (frequency range, FR) 1, an SCS may be 15 kHz or 30 kHz, and a PSS/SSS bandwidth or a PBCH bandwidth corresponding to the SCS is shown in Table 1 below.

**Table 1 PSS/SSS bandwidth and PBCH bandwidth corresponding to different SCSs**

| SCS | PSS/SSS bandwidth | PBCH bandwidth |
|---|---|---|
| 15 kHz | 1.91 MHz | 3.6 MHz |
| 30 kHz | 3.81 MHz | 7.2 MHz |

In this case, if a bandwidth of the terminal device is less than an SSB bandwidth, the terminal device cannot receive a complete synchronization signal or a complete PBCH. The bandwidth of the terminal device includes a baseband bandwidth and/or a radio frequency bandwidth, and is used to indicate a capability of an operation bandwidth for performing wireless communication transmission by the terminal device. For example, a bandwidth of a narrowband terminal device may specifically be 2 MHz, 5 MHz, or another bandwidth size.

Based on this, if the bandwidth of the terminal device is less than the PSS bandwidth or the SSS bandwidth, the terminal device cannot completely receive the synchronization signal. If the bandwidth of the terminal device is less than the PBCH bandwidth, the terminal device can receive only a part of PBCH information, and cannot demodulate all information carried on the PBCH. Consequently, a PBCH demodulation performance loss is large.

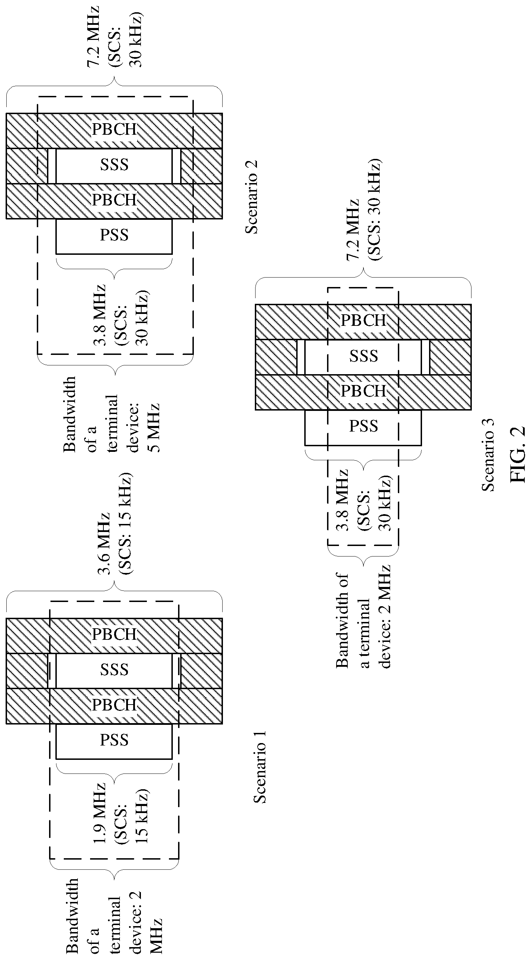

For example, in an implementation scenario shown in FIG. 2, when the subcarrier spacing SCS is 15 kHz, an overall SSB bandwidth may be 3.6 MHz, where the PSS bandwidth or the SSS bandwidth may be 1.9 MHz, and the PBCH bandwidth may be 3.6 MHz. A terminal device with a bandwidth of 2 MHz may receive a complete PSS/SSS synchronization signal, but can receive only a part of a PBCH signal. When the subcarrier spacing SCS is 30 kHz, the overall SSB bandwidth may be 7.2 MHz, where the PSS bandwidth or the SSS bandwidth may be 3.8 MHz, and the PBCH bandwidth may be 7.2 MHz. A terminal device with a bandwidth of 5 MHz may receive a complete PSS/SSS synchronization signal, but can receive only a part of a PBCH signal. A terminal device with a bandwidth of 2 MHz cannot receive a complete PSS/SSS synchronization signal, and cannot receive a complete PBCH signal.

Based on the foregoing technical problems, embodiments of this application provide a PBCH receiving method and apparatus. The PBCH receiving method and apparatus are mainly applicable to a scenario in which a reduced bandwidth terminal (for example, an NB terminal) performs network access by using an existing SSB in the NR system. The terminal device may perform combination processing, through a radio frequency re-modulation method, on PBCH data included in SSB blocks that are received on different frequency domain resources on different time domain resources, to obtain all information carried on PBCHs, and improve PBCH demodulation performance.

It should be noted that an implementation scenario of this application includes but is not limited to a scenario in which a bandwidth of the NB terminal is less than the PBCH bandwidth and is greater than or equal to the PSS/SSS bandwidth. This application is also applicable to a scenario in which the bandwidth of the NB terminal is less than the PBCH bandwidth and is less than or equal to the PSS/SSS bandwidth. This is not specifically limited in this application.

The following briefly describes an implementation environment and a device structure of this application.

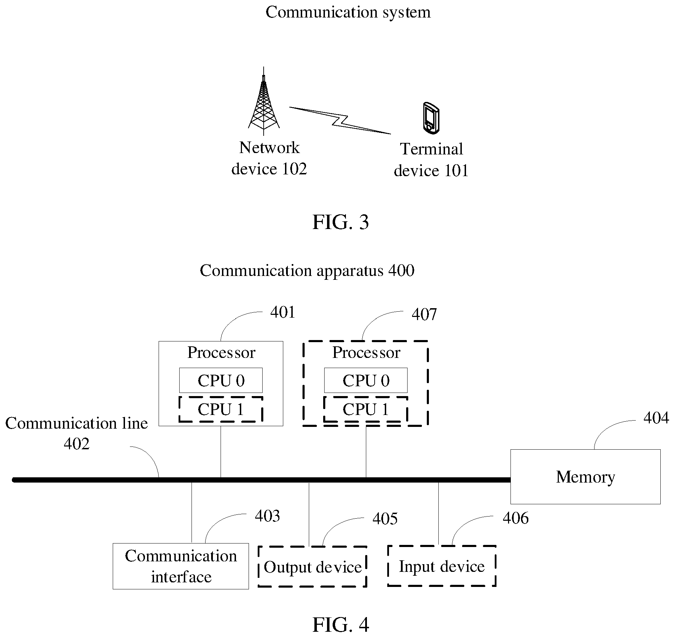

This application may be applied to an existing cellular communication system or an NR system, or may be applied to any other wireless communication system having a similar structure and function. As shown in FIG. 3, the communication system includes at least a terminal device 101 and a network device 102.

The terminal device 101 in embodiments of this application may also be referred to as a terminal, and may be a device having a wireless transceiver function. The device may be deployed on land, including indoor or outdoor, handheld, or vehicle-mounted deployment; or may be deployed on a water surface (for example, on a ship); or may be deployed in air (for example, on an air plane, a balloon, or a satellite).

The terminal device may be user equipment (user equipment, UE). The UE includes a handheld device, a vehicle-mounted device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like.

In embodiments of this application, an apparatus configured to implement a function of the terminal may be a terminal, or may be an apparatus, for example, a chip system, that can support the terminal in implementing this function. The apparatus may be installed in the terminal. In embodiments of this application, the chip system may include a chip, or may include a chip and another discrete device. In the technical solutions provided in embodiments of this application, the technical solutions provided in embodiments of this application are described by using an example in which the apparatus configured to implement the function of the terminal device is the UE.

The network device 102 in embodiments of this application may include a base station (base station, BS), and may be a device that is deployed in a radio access network and that may perform wireless communication with the terminal.

The base station may be in a plurality of forms, for example, a macro base station, a micro base station, a relay station, and an access point. For example, the base station in embodiments of this application may be a base station in 5G or a base station in LTE. The base station in 5G may also be referred to as a transmission reception point (transmission reception point, TRP) or a gNB.

In embodiments of this application, an apparatus configured to implement a function of the network device may be a network device, or may be an apparatus, for example, a chip system, that can support the network device in implementing the function. The apparatus may be installed in the network device.

In the technical solutions provided in embodiments of this application, the technical solutions provided in embodiments of this application are described by using an example in which the apparatus configured to implement the function of the network device is the network device and the network device is the base station.

The technical solutions provided in embodiments of this application may be applied to wireless communication between the network device and the terminal device. In embodiments of this application, the term "wireless communication" may be referred to as "communication" for short, and the term "communication" may also be described as "data transmission", "information transmission", or "transmission".

It should be noted that FIG. 3 is merely an example framework diagram, and a quantity of network element nodes included in FIG. 3 is not limited. In addition to functional nodes shown in FIG. 3, other nodes such as a core network device, a gateway device, and an application server may be further included. This is not limited. An access network device communicates with the core network device through a wired network or a wireless network, for example, through a next generation (Next Generation, NG) interface.

During specific implementation, network elements shown in FIG. 3, for example, the terminal device and the network device, may use a composition structure shown in FIG. 4 or include components shown in FIG. 4. FIG. 4 is a schematic diagram of a structure of a communication apparatus 400 according to an embodiment of this application. When the communication apparatus 400 has a function of the terminal device in embodiments of this application, the communication apparatus 400 may be a terminal device, or a chip or a system-on-a-chip in the terminal device. When the communication apparatus 400 has the function of the network device in embodiments of this application, the communication apparatus 400 may be a network device, or a chip or a system-on-a-chip in the network device.

As shown in FIG. 4, the communication apparatus 400 may include a processor 401, a communication line 402, and a communication interface 403. Further, the communication apparatus 400 may include a memory 404. The processor 401, the memory 404, and the communication interface 403 may be connected to each other through the communication line 402.

The processor 401 may be a central processing unit (Central Processing Unit, CPU), a general-purpose processor, a network processor (Network Processor, NP), a digital signal processor (Digital Signal Processor, DSP), a microprocessor, a microcontroller, a programmable logic device, or any combination thereof. The processor 401 may alternatively be another apparatus having a processing function, for example, a circuit, a device, or a software module.

The communication line 402 is configured to transmit information between the components included in the communication apparatus 400.

The communication interface 403 is configured to communicate with another device or another communication network. The another communication network may be an Ethernet, a radio access network (Radio Access Network, RAN), a wireless local area network (Wireless Local Area Network, WLAN), or the like. The communication interface 403 may be an interface circuit, a pin, a radio frequency module, a transceiver, or any apparatus that can implement communication.

The memory 404 is configured to store instructions. The instructions may be a computer program.

The memory 404 may be a read-only memory (Read-only Memory, ROM) or another type of static storage device that can store static information and/or instructions; may be a random access memory (Random Access Memory, RAM) or another type of dynamic storage device that can store information and/or instructions; or may be an electrically erasable programmable read-only memory (Electrically Erasable Programmable read-only Memory, EEPROM), a compact disc read-only memory (Compact Disc read-only Memory, CD-ROM) or another optical disc storage, an optical disc storage, a magnetic disk storage medium, or another magnetic storage device. The optical disc storage includes a compact optical disc, a laser disc, an optical disc, a digital versatile disc, a Blu-ray disc, or the like.

It should be noted that the memory 404 may exist independently of the processor 401, or may be integrated into the processor 401. The memory 404 may be configured to store instructions, program code, some data, or the like. The memory 404 may be located inside the communication apparatus 400, or may be located outside the communication apparatus 400. This is not limited. The processor 401 is configured to execute the instructions stored in the memory 404, to implement the methods provided in the following embodiments of this application.

In an example, the processor 401 may include one or more CPUs, for example, a CPU 0 and a CPU 1 in FIG. 4.

In an optional implementation, the communication apparatus 400 includes a plurality of processors. For example, the communication apparatus 400 may further include a processor 407 in addition to the processor 401 in FIG. 4.

In an optional implementation, the communication apparatus 400 further includes an output device 405 and an input device 406. For example, the input device 406 is a device such as a keyboard, a mouse, a microphone, or a joystick, and the output device 405 is a device such as a display screen or a speaker.

It should be noted that the communication apparatus 400 may be a desktop computer, a portable computer, a network server, a mobile phone, a tablet computer, a wireless terminal, an embedded device, a chip system, or a device having a structure similar to that in FIG. 4. In addition, the composition structure shown in FIG. 4 does not constitute a limitation on the communication apparatus. In addition to the components shown in FIG. 4, the communication apparatus may include more or fewer components than those shown in the figure, or some components may be combined, or different component arrangements may be used.

In embodiments of this application, the chip system may include a chip, or may include a chip and another discrete device.

With reference to the FIG. 3, when the terminal device is powered on or needs to perform cell handover, the terminal device needs to perform an initial access process based on a synchronization signal periodically broadcast by the network device. A purpose of initial access is mainly to obtain downlink synchronization with the network device, and obtain system information of a cell, for example, a master information block MIB and a system information block SIB. After obtaining the system information of the cell, the terminal device may determine whether the terminal device can camp on and/or access the cell, receive a paging message of the network device, and initiate a random access process to the network device, to establish a connection between the terminal device and the network device, and transmit user data.

The following describes implementations provided in embodiments of this application with reference to the communication system shown in FIG. 3. Each device in the following embodiments may have the components shown in FIG. 4. Actions, terms, and the like in embodiments of this application may be mutually referenced. This is not limited. In embodiments of this application, names of messages exchanged between devices, names of parameters in the messages, or the like are merely examples. Another name may alternatively be used during specific implementation. This is not limited.

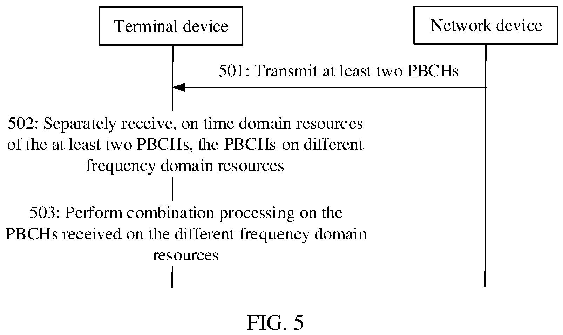

An embodiment of this application provides a PBCH receiving method, and the method is applied to the communication system shown in FIG. 3. As shown in FIG. 5, the method may include the following steps.

501: A network device transmits at least two PBCHs.

Specifically, the network device repeatedly sends an SSB on a same frequency domain resource at different moments, where the SSB includes the PBCH. Therefore, frequency domain resources of the at least two PBCHs in one periodicity are the same, that is, the frequency domain resources of the at least two PBCHs are in one periodicity, and different PBCHs in one periodicity carry same or partially same information.

502: A terminal device separately receives, on time domain resources of the at least two PBCHs, the PBCHs on different frequency domain resources.

A bandwidth of the terminal device is less than a PBCH bandwidth. Based on the foregoing descriptions, it may be learned that if the bandwidth of the terminal device is less than the PBCH bandwidth, the terminal device cannot receive all PBCHs, and therefore cannot obtain, through demodulation, complete information carried on the PBCHs.

Based on this, the terminal device may perform radio frequency re-modulation, that is, determine at least two different frequency domain resources on the time domain resources of the at least two PBCHs, and then separately receive the PBCHs on the at least two different frequency domain resources.

The radio frequency re-modulation means that the terminal device re-modulates a frequency domain resource range in which a radio frequency link operates. In this embodiment of this application, the radio frequency re-modulation may specifically mean that the terminal device tunes the radio frequency link, that is, the terminal device re-modulates the frequency domain resource range of the radio frequency link, to receive PBCHs on the frequency domain resources.

It should be noted that, if a sending link and a receiving link of the terminal device use a same radio frequency circuit, that the terminal device performs radio frequency re-modulation is equivalent to that both a frequency domain resource range of a sent signal and a frequency domain resource range of a received signal are modulated. If a sending link and a receiving link of the terminal device use different radio frequency circuits, that the terminal device performs radio frequency re-modulation may mean that the terminal device modulates a frequency domain resource range of the receiving link. Whether a frequency domain resource range of the sending link is modulated is not specifically limited in this application.

The frequency domain resource range may include at least one of a center frequency or an operation bandwidth. In this case, that the terminal device determines a frequency domain resource range for receiving the PBCH may specifically include determining at least one of a center frequency or an operation bandwidth for receiving the PBCH. For example, an operation bandwidth of the terminal device remains unchanged, and the terminal device may adjust, by adjusting the center frequency for receiving the PBCH, an upper limit and a lower limit of the frequency domain resource range for receiving the PBCH.

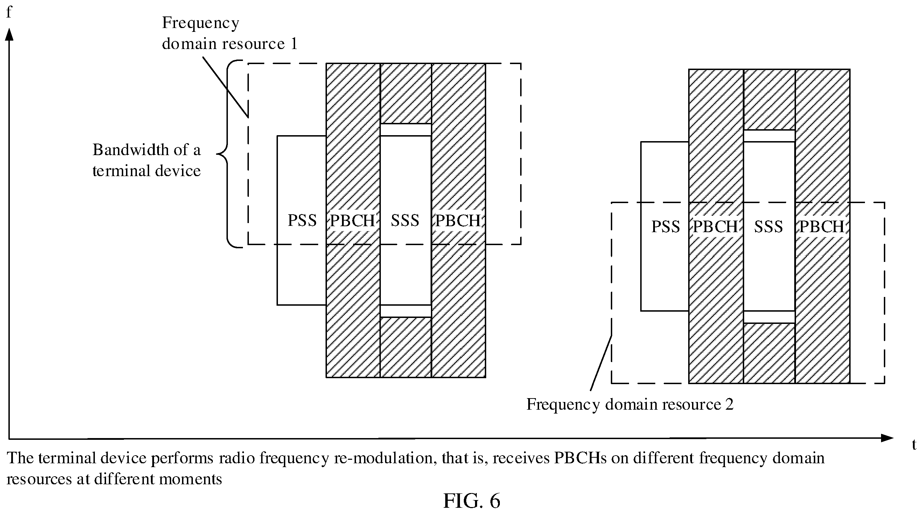

As shown in FIG. 6, an NB terminal device may determine a plurality of different frequency domain resource ranges for receiving PBCHs in one periodicity, for example, a frequency domain resource 1 and a frequency domain resource 2. The NB terminal device may receive the PBCHs on different frequency domain resources: the frequency domain resource 1 and the frequency domain resource 2 at different moments.

Because different frequency domain resources carry different PBCH coding redundancy information, the terminal device may obtain different coding information carried on the physical broadcast channels PBCHs by separately receiving the PBCHs on the different frequency domain resources. The terminal device may obtain all information carried on the PBCHs by subsequently performing combination processing on the PBCHs obtained from the different frequency domain resources, so that more diversity gains may be provided, and PBCH demodulation performance may be improved.

It should be noted that, in this embodiment of this application, the PBCH may be determined in two dimensions: a time domain resource and a frequency domain resource. In other words, PBCHs with same time domain resources and same frequency domain resources are considered as one PBCH, and PBCHs with different time domain resources and/or different frequency domain resources are considered as a plurality of different PBCHs.

In an implementation, the terminal device needs to determine whether to perform radio frequency re-modulation and determine a frequency domain resource range for receiving a plurality of PBCHs after performing radio frequency re-modulation. Specifically, the following may be included.
1. The terminal device may determine, according to a preset rule, a frequency domain resource range for receiving each PBCH.

The preset rule may specifically be a preset protocol. To be specific, the terminal device determines, based on a preset protocol specification, to perform radio frequency re-modulation on the PBCHs at different moments, and determines the frequency domain resource range for receiving each PBCH after the radio frequency re-modulation.

In addition, alternatively, the preset rule may specifically be a factory setting of the terminal device. To be specific, the terminal device determines, based on the device, to perform radio frequency re-modulation on the PBCHs at different moments, and determines the frequency domain resource range for receiving each PBCH after the radio frequency re-modulation.

In a possible implementation, that the terminal device determines a frequency domain resource range for receiving each PBCH specifically includes: The terminal device may determine, based on a coverage level or a signal quality level of a currently received signal, the frequency domain resource range for receiving each PBCH.

The coverage level or the signal quality level of the received signal is used to indicate a current capability of the terminal device to receive information transmitted by a network device. If the coverage level or the signal quality level of the currently received signal by the terminal device is higher than a preset threshold, it is considered that the terminal device can obtain all PBCH information without performing radio frequency re-modulation. If the coverage level or the signal quality level of the currently received signal by the terminal device is lower than a preset threshold, it is considered that the terminal device may not obtain all PBCH information, and needs to perform radio frequency re-modulation to obtain the complete PBCH information.

Specifically, the terminal device may determine the coverage level or the signal quality level of the currently received signal based on a currently measured reference signal received power (Reference Signal Received power, RSRP), position information of the terminal device in a communication cell, or the like.

In an implementation, that the terminal device determines, based on a coverage level or a signal quality level of a received signal, the frequency domain resource range for receiving each PBCH may specifically include: if the RSRP measured by the terminal device is less than or equal to a preset threshold (a preset RSRP threshold), determining to perform radio frequency re-modulation, where that is, the terminal device determines a plurality of frequency domain resource ranges for receiving the PBCH; or if the RSRP measured by the terminal device is greater than a preset threshold, determining not to perform radio frequency re-modulation.

Alternatively, that the terminal device determines, based on a coverage level or a signal quality level of a received signal, the frequency domain resource range for receiving each PBCH may specifically include: The terminal device determines the coverage level or the signal quality level of the currently received signal based on whether the measured RSRP is less than or equal to a preset threshold (a preset RSRP threshold). If the coverage level or the signal quality level of the currently received signal is less than or equal to a specific threshold (a preset signal coverage level threshold or a preset signal quality level threshold), the terminal device determines to perform radio frequency re-modulation, that is, the terminal device determines a plurality of frequency domain resource ranges for receiving the PBCH; or if the coverage level or the signal quality level of the currently received signal is greater than a specific threshold, the terminal device determines not to perform radio frequency re-modulation.

The preset RSRP threshold, the preset signal coverage level threshold or the preset signal quality level threshold may be specifically predefined or preconfigured by the terminal device, or may be determined by the terminal device based on received configuration signaling of the network device. This is not specifically limited in this application.

2. The terminal device may determine, based on the received configuration signaling, the frequency domain resource range for receiving each PBCH.

The terminal device may receive the configuration signaling of the network device, determine, based on the configuration signaling, to perform radio frequency re-modulation on the PBCHs at different moments, and determine the frequency domain resource range for receiving each PBCH after the radio frequency re-modulation.

Further, to improve demodulation performance of the PBCHs received by the terminal device, when the terminal device performs radio frequency re-modulation on the received PBCHs, a plurality of different frequency domain resources determined by the terminal device need to satisfy the following conditions, so that the terminal device can receive the PBCHs on the plurality of different frequency domain resources, and obtain more information carried on the PBCHs.

In an implementation, an intersection set of the at least two different frequency domain resources is smallest, and/or a union set of the at least two different frequency domain resources is largest.

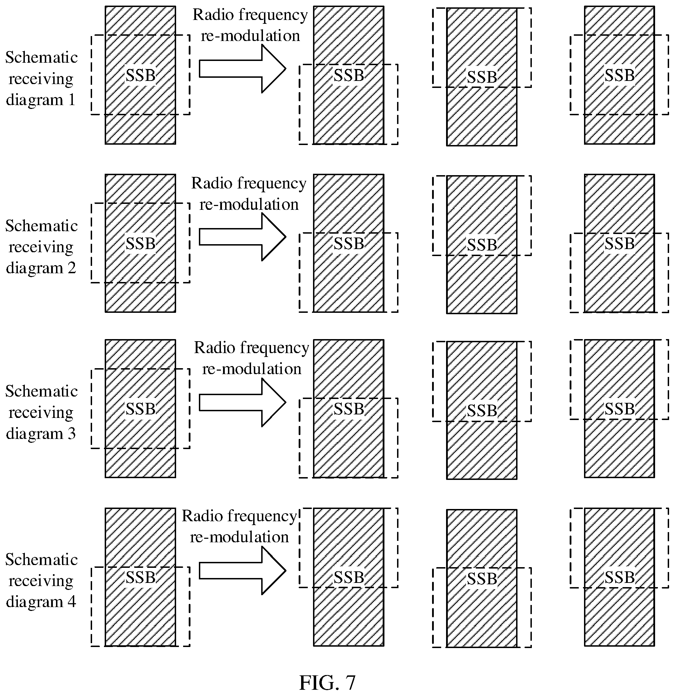

For example, if a MIB periodicity is 80 ms, and an SSB periodicity is 20 ms, PBCHs with a same SSB index value may be transmitted for four times. If the bandwidth of the terminal device is 2 MHz, for the four times of SSB transmission, four different frequency domain resources for receiving the PBCH that are determined by the terminal device by performing radio frequency re-modulation may be shown in several schematic receiving diagrams in FIG. 7.

In the foregoing determining manner, it may be ensured that the terminal device receives the complete PBCH information as much as possible, and can obtain a maximum diversity receiving gain, so that PBCH demodulation performance is optimal.

In addition, in an implementation, the union set of the at least two different frequency domain resources may include at least all frequency domain resources of the PBCHs, and the terminal device may receive the complete PBCH information, to optimize PBCH demodulation performance to a maximum extent.

503: The terminal device performs combination processing on the PBCHs received on the different frequency domain resources.

The terminal device may perform combination processing on PBCHs that are received in one periodicity and that have a same SSB index value. For example, if a periodicity of MIB information is 80 ms, and the periodicity of the SSB is 20 ms, that is, in one MIB periodicity, SSBs with a same index value may be transmitted for four times. Therefore, the NB terminal device may perform combination processing on four received PBCHs with a same SSB index value, to obtain information carried on the PBCHs.

The combination processing indicates a process in which the terminal device performs a series of processing such as decoding on the plurality of received PBCHs to obtain the information carried on the PBCHs. Optionally, the information carried on the PBCHs may include the MIB information or same information carried on different PBCHs. The information carried on the PBCHs may alternatively include other information. This is not limited in this application. The combination processing performed by the terminal device on the received PBCHs may include processes such as channel estimation, channel equalization, demodulation, and channel decoding. In this embodiment of this application, the terminal device needs to perform combination processing on PBCHs received for a plurality of times. Based on a specific implementation status, a process of combining information may be performed in any one of the foregoing four processes: the channel estimation, the channel equalization, the demodulation, or the channel decoding. Specifically, the combination processing may be performed in a preconfigured manner. This is not specifically limited in this application. The following describes several possible implementations of the combination processing by using examples.

A processing process in which decoding is performed on the received PBCHs is used to restore the received information. To reduce a difference between a received signal and a sent signal as much as possible, an appropriate channel coding manner and an appropriate decoding policy need to be used in the channel decoding process, so that impact of interference and noise is eliminated as much as possible. The channel estimation is a process of estimating a model parameter of a channel model of a transmitting end from received data. The channel equalization refers to an anti-fading measure taken to improve transmission performance of a communication system on a fading channel, and may be mainly used to eliminate or reduce problems such as intersymbol interference and intercarrier interference that are caused by a multipath delay during broadband communication. The demodulation is an inverse process of modulation. A purpose of the modulation is to convert a to-be-transmitted analog signal or digital signal into a highfrequency signal suitable for channel transmission. The signal is referred to as a modulated signal. A modulation process is used at a transmitting end of a communication system. Correspondingly, the demodulation is to restore the modulated signal to a to-be-transmitted original signal at a receiving end. The demodulation generally includes a hard decision and a soft decision. For the soft decision, release information of a transmitted original signal is obtained through demodulation. The channel decoding is used to decode information obtained by a demodulator through demodulation, to obtain decoding information of PBCH data.

In an implementation, the performing combination processing on the PBCHs received on the different frequency domain resources may specifically include the following steps.

Step 1: The terminal device demodulates the at least two received PBCHs to obtain at least two pieces of demodulation information.

Before the terminal device demodulates the at least two received PBCHs, the terminal device needs to first perform channel estimation and channel equalization processing on the PBCHs received each time.

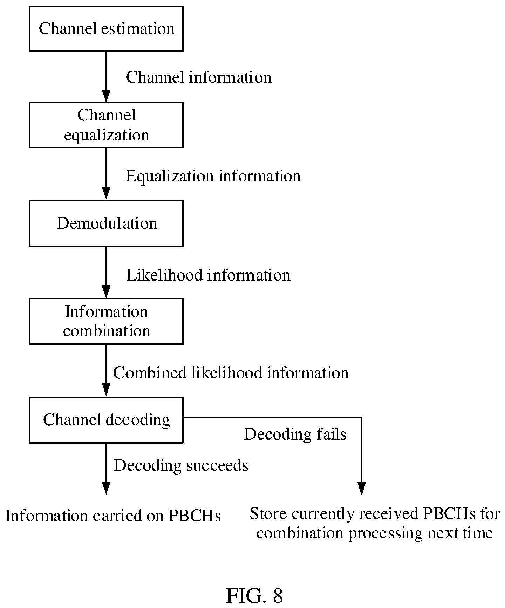

For example, for the received PBCHs, the terminal device performs channel estimation based on a demodulation reference signal (Demodulation Reference Signal, DMRS) included in the PBCHs, to obtain channel information for transmitting the PBCH data. Then, as shown in FIG. 8, the terminal device performs channel equalization on the received PBCHs based on the obtained channel information, to obtain equalization information of the PBCHs after the channel equalization.

For a specific process and algorithm in which the terminal device performs channel synchronization and channel equalization processing on the received PBCHs, refer to related technical descriptions. This is not specifically limited in this application.

Then, the terminal device may separately perform demodulation based on the equalization information obtained after the channel equalization, to obtain the at least two pieces of demodulation information.

In an implementation, as shown in FIG. 8, after demodulating the PBCHs, the terminal device may obtain likelihood information of PBCH coding bits. The likelihood information may be used to describe a possible value probability of an unknown parameter when an output result of a random variable is known.

In an implementation, a specific demodulation algorithm may include a hard decision and a soft decision. The hard decision refers to performing N-bit quantization on an output signal of the demodulator. If a quantized component is greater than a threshold value, it is considered that an output is 1; otherwise, an output is 0. The hard decision is an N-bit quantization algorithm, and the soft decision is a multi-bit (where a quantity of bits is far greater than N) uniform quantization algorithm. The soft decision is specifically that a demodulated analog signal is directly accessed, through the demodulator, to a decoder to implement decoding.

In an implementation of the soft decision, the terminal device obtains likelihood information of corresponding coding bits through demodulation. For a frequency domain resource unit that does not receive a signal, in an implementation, a likelihood information amount of bits carried on the frequency domain resource unit may be set to zero.

Step 2: The terminal device performs channel decoding after combining the at least two pieces of demodulation information, to obtain information carried on the PBCHs.

Specifically, the terminal device may combine at least two pieces of likelihood information obtained through demodulation, to obtain combined likelihood information. As shown in FIG. 8, the terminal device may perform channel decoding on the combined likelihood information, to obtain the information carried on the PBCHs.

In a process in which the terminal device receives and decodes a plurality of PBCHs, for currently received PBCHs, if the terminal device has previously received, in a same MIB periodicity, PBCHs corresponding to a same SSB index value, the terminal device combines demodulation information obtained after processing the currently received PBCHs and demodulation information of the previously received PBCHs, and then the terminal device may perform channel decoding based on combined demodulation information, to obtain the information carried on the PBCHs. If the terminal device has not previously received PBCHs corresponding to a same SSB index value, the terminal device directly performs decoding based on PBCH demodulation information obtained through current detection, to obtain decoding information of the PBCHs.

In an implementation, the combining the at least two pieces of demodulation information may be understood as combining, for coding bits of a same PBCH, information obtained after the coding bits in PBCH data received for a plurality of times are demodulated.

In another possible implementation, that the terminal device performs combination processing on the PBCHs received on the different frequency domain resources may specifically include:

The terminal device performs channel estimation, channel equalization, demodulation, and channel decoding processing after combining the at least two received PBCHs, to obtain the information carried on the PBCHs.

Alternatively, the terminal device may separately perform channel estimation on the at least two received PBCHs, to obtain at least two pieces of channel information, and then perform channel equalization, demodulation, and channel decoding processing after combining the at least two pieces of channel information, to obtain the information carried on the PBCHs.

Alternatively, the terminal device may separately perform channel estimation and channel equalization processing on the at least two received PBCHs, to obtain at least two pieces of equalization information, and then perform demodulation and channel decoding processing after combining the at least two pieces of equalization information, to obtain the information carried on the PBCHs.

According to the foregoing implementation provided in this application, the terminal device may implement, through radio frequency re-modulation, frequency hopping on different frequency resources, to receive different PBCHs, and then perform combination processing based on the different received PBCHs, to obtain all information carried on the PBCHs. This effectively improves PBCH demodulation performance, and avoids a problem that a PBCH demodulation information loss is large when a narrowband terminal device performs synchronization based on an SSB in an existing NR system.

In addition, in an implementation, because the terminal device needs to perform time-frequency synchronization with the network device in a process of blindly detecting an SSB, before step 503 in the foregoing implementation, to be specific, before the terminal device performs combination processing on the PBCHs received on the different frequency domain resources, the terminal device may perform time-frequency synchronization processing with the network device based on a PSS and an SSS included in a detected SSB.

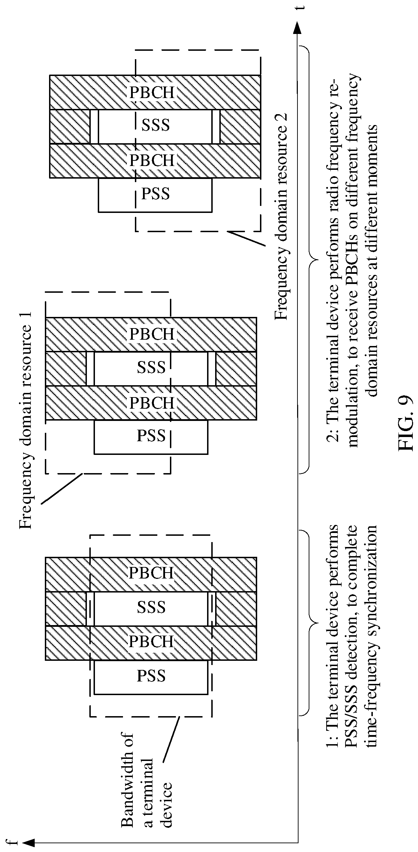

Specifically, as shown in FIG. 9, when detecting the SSB, the terminal device may first detect the PSS and the SSS, and perform time synchronization and frequency synchronization with the network device. The terminal device detects a PBCH after completing the time synchronization and the frequency synchronization with the network device, to obtain broadcast information carried on the PBCH.

Step 1: The terminal device performs PSS and/or SSS detection, to complete time-frequency synchronization.

The bandwidth of the terminal device may be greater than or equal to a PSS bandwidth and an SSS bandwidth, that is, the terminal device may receive a complete PSS and a complete SSS. Alternatively, the bandwidth of the terminal device may be less than the PSS bandwidth or the SSS bandwidth, that is, the terminal device may receive the complete PSS or the complete SSS, or a part of the PSS or the SSS. In this case, the terminal device may not obtain a complete synchronization signal. This is not specifically limited in this application.

In addition, when performing PSS and/or SSS detection, the terminal device may record or store the received PBCHs, to subsequently perform combination processing on the PBCHs received at different moments.

Step 2: The terminal device performs radio frequency re-modulation, to receive the PBCHs on the different frequency domain resources at different moments.

A frequency domain resource on which the terminal device receives the PSS and/or the SSS may be the same as or different from a frequency domain resource on which the terminal device receives the PBCH. This is not specifically limited in this application.

If the PBCHs in step 1 and the PBCHs in step 2 are in a same MIB periodicity, the terminal device may perform combination processing on the PBCHs received in step 1 and the PBCHs received in step 2. If the PBCHs in step 1 and the PBCHs in step 2 are not in a same MIB periodicity, the terminal device performs combination processing only on the PBCHs received at the different moments in step 2.

In addition, an SSB index value in step 1 and an SSB index value in step 2 may be the same or may be different. For example, the terminal device may perform combination processing on a plurality of PBCHs that are in a same MIB periodicity and that correspond to a plurality of same SSB beams, that is, a plurality of SSB index values are the same.

Further, in consideration that different SSB beams may also carry a same PBCH, the terminal device may perform combination processing on a plurality of PBCHs corresponding to a plurality of different SSB index values.

In another implementation, the terminal device may also detect the PBCH when detecting the PSS and the SSS, that is, detect the PBCH when performing time-frequency synchronization with the network device, to obtain the broadcast information carried on the PBCH. This is not specifically limited in this embodiment of this application.

It may be understood that a same step or a step or a message having a same function in embodiments of this application may be mutually referenced in different embodiments.

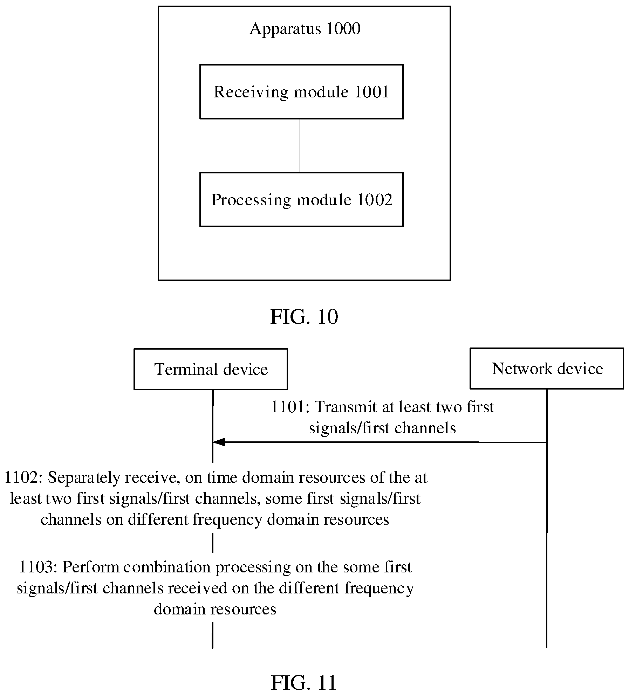

Further, an embodiment of this application further provides a physical broadcast channel PBCH receiving apparatus. As shown in FIG. 10, the apparatus 1000 includes a receiving module 1001 and a processing module 1002.

The receiving module 1001 may be configured to separately receive, on time domain resources of at least two physical broadcast channels PBCHs, the PBCHs on different frequency domain resources, where frequency domain resources of the at least two PBCHs are the same.

The processing module 1002 may be configured to perform combination processing on the PBCHs received on the different frequency domain resources, where a bandwidth of a terminal device is less than a PBCH bandwidth.

In a possible design, the frequency domain resources of the at least two PBCHs are in one periodicity, and different PBCHs carry same information.

In a possible design, the processing module 1002 may be further configured to determine a frequency domain resource range for receiving each PBCH.

In a possible design, the frequency domain resource range includes at least one of a center frequency or an operation bandwidth.

In a possible design, the processing module 1002 may be specifically further configured to: determine, according to a preset rule, the frequency domain resource range for receiving each PBCH; or determine, based on received configuration signaling, the frequency domain resource range for receiving each PBCH.

In a possible design, the processing module 1002 may be specifically further configured to determine, based on a coverage level or a signal quality level of a received signal, the frequency domain resource range for receiving each PBCH.

In a possible design, the processing module 1002 may be specifically further configured to determine, on the basis that a measured reference signal received power RSRP is less than or equal to a preset threshold, the frequency domain resource range for receiving each PBCH.

In a possible design, the preset threshold is predefined or preconfigured, or is determined based on the received configuration signaling.

In a possible design, an intersection set of the different frequency domain resources is smallest, and/or a union set of the different frequency domain resources is largest.

In a possible design, the union set of the different frequency domain resources includes at least all frequency domain resources of the PBCHs.

In a possible design, the processing module 1002 may be specifically configured to: demodulate the at least two received PBCHs to obtain at least two pieces of demodulation information; and perform channel decoding after combining the at least two pieces of demodulation information, to obtain information carried on the PBCHs.

In a possible design, the processing module 1002 may be specifically further configured to perform channel estimation, channel equalization, demodulation, and channel decoding after combining the at least two received PBCHs, to obtain information carried on the PBCHs.

In a possible design, the processing module 1002 may be further configured to perform time-frequency synchronization processing with a network device based on a primary synchronization signal PSS and a secondary synchronization signal SSS that are included in a detected synchronization signal block SSB.

It may be understood that when the foregoing apparatus is an electronic device, the receiving module may be a transceiver, and may include an antenna, a radio frequency circuit, and the like, and the processing module may be a processor, for example, a baseband chip. When the apparatus is a component having a function of the terminal device in the foregoing embodiments, the receiving module may be a radio frequency unit, and the processing module may be a processor. When the apparatus is a chip system, the receiving module may be an input interface of the chip system, and the processing module may be a processor of the chip system, for example, a central processing unit (central processing unit, CPU).

It should be noted that, for a specific execution process and embodiment of the apparatus 1000, refer to the steps performed by the terminal device in the foregoing method embodiments and related descriptions. For resolved technical problems and technical effects brought thereof, refer to the content in the foregoing embodiments. Details are not described one by one herein again.

In this embodiment, the PBCH receiving apparatus is presented in a form in which functional modules are obtained through division in an integration manner. The "module" herein may be a specific circuit, a processor and a memory that execute one or more software or firmware programs, an integrated logic circuit, and/or another device that can provide the foregoing functions. In a simple embodiment, a person skilled in the art may figure out that the PBCH receiving apparatus may be in the form shown in FIG. 4.

For example, functions/implementation processes of the processing module in FIG. 10 may be implemented by the processor 401 in FIG. 4 by invoking the computer program instructions stored in the memory 404. For example, functions/implementation processes of the receiving module 1001 in FIG. 10 may be implemented by the communication interface 403 in FIG. 4, and functions/implementation processes of the processing module 1002 may be implemented by the processor 401 in FIG. 4 by invoking the computer-executable instructions stored in the memory 404.

In an example embodiment, a computer-readable storage medium including instructions is further provided. The instructions may be executed by the processor 401 or the processor 407 of the communication apparatus 400 to complete the PBCH receiving method in the foregoing embodiments. Therefore, for technical effects that can be achieved by the computer-readable storage medium, refer to the foregoing method embodiments. Details are not described herein again.

In addition to the foregoing embodiments, there is another case in which a downlink channel or a downlink signal transmission bandwidth is greater than a maximum bandwidth of the terminal device. Consequently, the terminal device cannot receive complete information carried on a complete downlink channel or a complete downlink signal, and transmission performance of the downlink channel or the downlink signal deteriorates.

For example, the downlink channel includes a physical downlink control channel (Physical Downlink Control Channel, PDCCH) used to transmit downlink control information (Downlink Control Information, DCI), or a physical downlink shared channel (Physical Downlink Shared Channel, PDSCH) used to transmit user data and the like.

The downlink signal may include a demodulation reference signal (Demodulation Reference Signal, DMRS), a channel state information reference signal (Channel State Information Reference Signal, CSI-RS), a tracking reference signal (Tracking Reference Signal, TRS), a phase tracking reference signal (Phase Tracking Reference Signal, PTRS), and the like.

For example, in the following embodiments of this application, only a PDCCH is used as an example for detailed description. For other processes of frequency hopping transmission and combination detection of the downlink channel or the downlink signal, refer to a transmission process of the PDCCH. Details are not described again.

In an NR system, a concept of a control resource set (control resource set, CORESET) is introduced. The CORESET is a consecutive resource set in time domain and frequency domain, and the PDCCH is transmitted in a range of the CORESET.

A CORESET 0 is used as an example. For a terminal device in an initial access phase, after receiving an SSB, the terminal device may obtain, from a master information block (master information block, MIB) information carried on a PBCH, an indication of the CORESET 0 and a common search space 0 (common search space 0) associated with the CORESET 0. The terminal device may receive, based on the indication, a PDCCH for scheduling a SIB 1, where the PDCCH indicates related information such as a PDSCH position and a modulation and coding scheme of the SIB 1. After detecting the PDCCH, the terminal device may receive a PDSCH based on a DCI indication carried on the PDCCH.

Specific information of the SIB 1 is transmitted on the PDSCH, and the DCI indication carried on the PDCCH that schedules the SIB 1 indicates a time-frequency resource position of the PDSCH that carries the SIB 1 and other related information of the PDSCH, for example, modulation and coding information. This process may be briefly described as that the PDCCH that schedules the SIB 1 indicates scheduling information of the PDSCH that carries the SIB 1 or that a SIB 1-PDCCH schedules the SIB 1.

For a CORESET #0, if a subcarrier spacing SCS of the PDCCH is 15 kHz or 30 kHz, quantities of resource blocks (resource blocks, RBs) corresponding to the two SCSs are different, and CORESET bandwidth sizes corresponding to the two SCSs are different, for example, as shown in Table 2.

**Table 2 Quantities of RBs and CORESET bandwidths corresponding to different SCSs**

| SCS | Quantity of RBs | CORESET bandwidth (MHz) |
|---|---|---|
| 15 kHz | 24 | 4.32 |
| | 48 | 8.64 |
| | 96 | 17.28 |
| 30 kHz | 24 | 8.64 |
| | 48 | 17.28 |

It may be learned that when the maximum bandwidth of the terminal device is 5 MHz, for both a scenario in which the SCS is 15 kHz and the quantity of RBs is 48 RBs or 96 RBs and a scenario in which the SCS is 30 kHz and the quantity of RBs is 48 RBs or 96 RBs, corresponding CORESET bandwidths are all greater than the maximum bandwidth of the terminal device. In this case, the terminal device may not be able to completely monitor the PDCCH, and consequently transmission performance of the PDCCH deteriorates.

Based on this, this application provides a downlink channel or downlink signal transmission manner. The network device transmits a downlink channel or a downlink signal through frequency hopping, so that the terminal device may receive the downlink channel or the downlink signal for a plurality of times on different frequency domain resources at different moments. Further, the terminal device may perform combination detection on the downlink channel or the downlink signal received at a plurality of moments, to obtain complete information, to improve transmission performance of the downlink channel or the downlink signal.

With reference to the communication system shown in FIG. 3 and the communication apparatus shown in FIG. 4, an embodiment of this application provides a downlink channel or downlink signal transmission method. As shown in FIG. 11, the method may include the following steps.

1101: A network device transmits at least two first signals/first channels.

In an implementation, the at least two first signals/first channels carry same information.

It should be noted that, that the at least two first signals/first channels carry same information specifically means that all information carried on the at least two first signals/first channels is the same, or a part of information carried on the at least two first signals/first channels is the same, but other different information such as time information is also allowed to be included. In this embodiment of this application, after receiving at least two first signals/first channels on different time-frequency resources, a terminal device may perform combination processing on the at least two first signals/first channels that carry same information, and processing on different information carried on the at least two first signals/first channels is not limited.

In addition, that the at least two second signals/second channels carry same information specifically means that information or bits, before coding, are carried on the at least two second signals/second channels are the same, and/or bits or information, after coding, that is carried on the at least two second signals/second channels is the same.

In an implementation, the first channel may include the foregoing downlink physical channel such as the PDCCH or the PDSCH.

In an implementation, the first signal may include the foregoing downlink signal such as the DMRS, the CSI-RS, the TRS, or the PTRS.

In an implementation, the at least two first signals/first channels may be the same, or may be different.

In an implementation, the at least two first channels are at least two first PDCCHs, and the at least two first PDCCHs are used to carry same downlink control information DCI for scheduling a system information block SIB. In other words, the at least two first PDCCHs are used to schedule a system information block SIB, where the SIB includes a SIB 1 or other system information (other system information, OSI).

In an implementation, during actual network transmission, scheduling information of a PDSCH carrying the SIB 1 basically does not change. Therefore, it may be assumed that DCI information carried on a PDCCH sent by the network device in a period of time is the same, so that the terminal device may attempt to receive some PDCCHs on different frequency resources at different moments, that is, receive the PDCCHs through frequency hopping. Further, the terminal device may perform combination detection on PDCCH data received on the different frequency resources at the different moments. If the terminal device performs combination detection and successfully performs decoding, the terminal device obtains complete DCI information; or if the terminal device performs combination detection but fails to perform decoding, the terminal device may continue to receive a subsequent PDCCH, and continue to attempt to perform frequency hopping receiving and combination detection. For one PDCCH, because different coding bits are carried on different frequency resources of the PDCCH, when the PDCCH is transmitted for a plurality of times at different moments, the terminal device receives some PDCCHs on different frequency resources at different moments, and combines some PDCCH data received for a plurality of times. In comparison with a case in which some PDCCHs are received on a same frequency resource at different moments or a part of the PDCCH is received only at a specific moment, an additional coding gain and repetition gain may be obtained, so that detection performance of the PDCCH may be improved. This is more conducive to obtaining the DCI carried on the PDCCH.

Extendedly, the network device may also ensure, as much as possible, that DCI information carried on the PDCCH that schedules the SIB 1 within specific time remains unchanged, so that the terminal device can perform combination detection on a plurality of PDCCHs.

In an implementation, aggregation levels (Aggregation levels, ALs) of the at least two first PDCCHs are the same.

In an implementation, control channel elements (control channel elements, CCEs) forming the at least two first PDCCHs are the same.

In another implementation, the CCEs forming the at least two first PDCCHs may alternatively be different. Extendedly, in this implementation, the CCEs forming the two first PDCCHs are preconfigured or predefined, or are configured by a base station by using signaling.

In an implementation, the at least two first channels may be at least two first PDSCHs. Frequency domain resources of the at least two first PDSCHs may be the same, or may be different. In a preferred manner, the frequency domain resources of the at least two first PDSCHs are the same. To be specific, when a maximum bandwidth of the terminal device is less than a PDSCH transmission bandwidth, the terminal device may receive, by using a frequency hopping receiving method, the PDSCHs on different frequency resources at different moments, and perform combination detection on PDSCH data received for a plurality of times.

Further, the first PDSCH may be used to carry a system information block SIB. The at least two first PDSCHs may be used to carry a same SIB.

The first PDSCH carrying the SIB may be scheduled by a corresponding broadband PDCCH, or may be scheduled by using a PDCCH, for example, a second PDCCH, whose bandwidth is less than or equal to the maximum channel bandwidth of the terminal device.

To be specific, in an implementation, scheduling information of the first PDSCH may be carried in the downlink control information DCI of the foregoing first PDCCH, in other words, the first PDSCH may be scheduled by the foregoing first PDCCH.

Alternatively, in another implementation, scheduling information of the first PDSCH may be carried in downlink control information DCI of the second PDCCH, in other words, the first PDSCH may be scheduled by the second PDCCH. A bandwidth of the second PDCCH is less than or equal to the maximum channel bandwidth of the terminal device. Further, in an implementation, a bandwidth of a control resource set for transmitting the second PDCCH is less than or equal to the maximum channel bandwidth of the terminal device, or a bandwidth of a control resource set for transmitting the second PDCCH is greater than the maximum channel bandwidth of the terminal device.

Alternatively, in still another implementation, the first PDCCH schedules a second PDSCH, where the second PDSCH may also be used to carry a system information block SIB, and a bandwidth of the second PDSCH is less than or equal to the maximum channel bandwidth of the terminal device. It may be understood that in this implementation, the terminal needs to receive, through frequency hopping, the PDCCH that schedules the SIB, but does not need to receive the SIB through frequency hopping.

In another implementation, before step 1101, the method may further include: The network device sends first information to the terminal device, where the first information is used to indicate whether the at least two first signals/first channels carry same information.

Optionally, the first information may be further used to indicate whether the at least two first signals/first channels are repeatedly transmitted, or the first information is used to indicate whether the at least two first signals/first channels carry same information, or the first information is used to indicate whether the terminal device may perform combination receiving on the at least two first signals/first channels, or the like. In this application, the foregoing several descriptions are considered equivalent, and are not repeatedly explained subsequently.

For example, the network device may indicate, by using an SSB, whether DCI information carried on a plurality of PDCCHs is the same. In other words, the network device may indicate whether the terminal device can perform combination decoding on the PDCCH data received for the plurality of times. When the first information indicates that the DCI information carried on the plurality of PDCCHs is the same, the terminal device may perform combination detection on the PDCCH data received for the plurality of times. Otherwise, the terminal device cannot perform combination detection on the PDCCH data received for the plurality of times.

In an implementation, the first information may be carried in an SSB, a SIB, radio resource control (Radio Resource Control, RRC) signaling, a media access control (Media Access Control, MAC) control element (Control Element, CE), or DCI.

Further, that the first information is carried in an SSB may specifically include: The first information is carried in an idle bit in a master information block MIB of the SSB, and/or carried in an additional payload of the first PBCH of the SSB.

In an implementation, the first information may alternatively be carried on the second PBCH. The second PBCH is different from the first PBCH in the existing SSB. For example, time-frequency resources of the second PBCH and the first PBCH may be different.

1102: The terminal device separately receives, on time domain resources of the at least two first signals/first channels, some first signals/first channels on different frequency domain resources.

In an implementation, the maximum channel bandwidth of the terminal device is less than a bandwidth of any one of the at least two first signals/first channels.

It should be noted that the maximum channel bandwidth of the terminal device may be a maximum bandwidth capability of the terminal device. The maximum channel bandwidth of the terminal device may be understood as a bandwidth supported by a software and hardware capability of the terminal device. It may be understood that descriptions such as the maximum channel bandwidth of the terminal device, a maximum bandwidth of the terminal device, or a maximum bandwidth supported by the terminal device are considered equivalent. For example, the maximum channel bandwidth of the terminal device is 5 MHz. Extendedly, the maximum channel bandwidth of the terminal device may alternatively be a maximum bandwidth capability activated by the terminal device. For example, the maximum channel bandwidth of the terminal device is 15 MHz, but only 5 MHz is activated, that is, the maximum channel bandwidth activated by the terminal device is 5 MHz.

The terminal device may perform radio frequency re-modulation, that is, determine at least two different frequency domain resources on the time domain resources of the at least two first signals/first channels, and then separately receive the some first signals/first channels on the at least two different frequency domain resources.

In an implementation, the terminal device may separately receive, by using a frequency hopping receiving method on time domain resources of the PDCCH, some PDCCHs on different frequency domain resources at different moments.

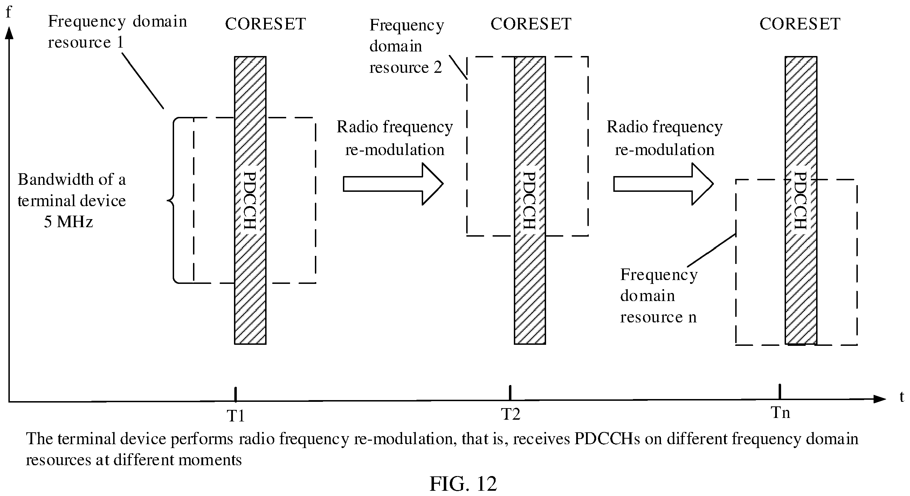

For example, as shown in FIG. 12, the maximum bandwidth of the terminal device is 5 MHz, and is less than a CORESET bandwidth. The terminal device may receive the PDCCH on a frequency domain resource 1 at a moment T1, receive the PDCCH on a frequency domain resource 2 at a moment T2, ..., and receive the PDCCH on a frequency domain resource n at a moment Tn. n is greater than or equal to 2.

In an implementation, an intersection set of the at least two different frequency domain resources is smallest, and/or a union set of the at least two different frequency domain resources is largest.

In addition, in an implementation, the union set of the at least two different frequency domain resources may include at least all frequency domain resources of the PDCCH, and the terminal device may receive complete information carried on the PDCCH, to optimize PDCCH demodulation performance to a maximum extent. For example, a union set of the frequency domain resource 1, the frequency domain resource 2, ..., and the frequency domain resource n includes at least all frequency domain resources of the PDCCH.

In an implementation, the terminal device may determine, according to a preset rule, a plurality of frequency domain resource ranges for receiving the first signals/first channels, or determine, based on received configuration signaling, a plurality of frequency domain resource ranges for receiving the first signals/first channels. For a specific process of determining the frequency domain resource ranges, refer to related descriptions based on the PBCH in the foregoing implementations. Details are not described herein again.

1103: The terminal device performs combination processing on the some first signals/first channels received on the different frequency domain resources.

It should be noted that, the terminal device may, by performing combination processing on the some first signals/first channels received for a plurality of times, obtain complete information, after coding, that is carried on the first signals/first channels, or obtain complete original information carried on the first signals/first channels. In addition, the terminal device may receive the some first signals/first channels only once, and then obtain, through decoding, the complete information carried on the first signals/first channels. In this case, the terminal device may not need to perform combination processing on the some first signals/first channels received for a plurality of times. Alternatively, the terminal device may not obtain, by performing combination processing on the some first signals/first channels received for a plurality of times, the complete information carried on the first signals/first channels, and needs to repeatedly receive the some first signals/first channels. In an actual implementation scenario, all the foregoing cases are possible, and details are not described subsequently. However, according to the implementation provided in this application, in any one of the foregoing scenarios, a demodulation capability of the terminal device may be effectively improved.

For example, the terminal device may receive some PDCCHs on different frequency domain resources, and perform combination detection on some PDCCH data received for a plurality of times.

In an implementation, the terminal device may demodulate the at least two received first signals/first channels to obtain at least two pieces of demodulation information; and perform channel decoding after combining the at least two pieces of demodulation information, to obtain information carried on the first signals/first channels.

Alternatively, in an implementation, the terminal device may perform a series of processes such as channel estimation, channel equalization, demodulation, and channel decoding after combining the at least two received first signals/first channels, to obtain information carried on the first signals/first channels.

For a specific process of the foregoing combination processing, refer to related descriptions in the foregoing implementations. Details are not described herein again.

In an implementation, the first channel may be a PDSCH. To be specific, when the maximum bandwidth of the terminal device is less than a PDSCH transmission bandwidth, the terminal device may receive, by using a frequency hopping receiving method, the PDSCH on different frequency resources at different moments, and perform combination detection on PDSCH data received for a plurality of times.

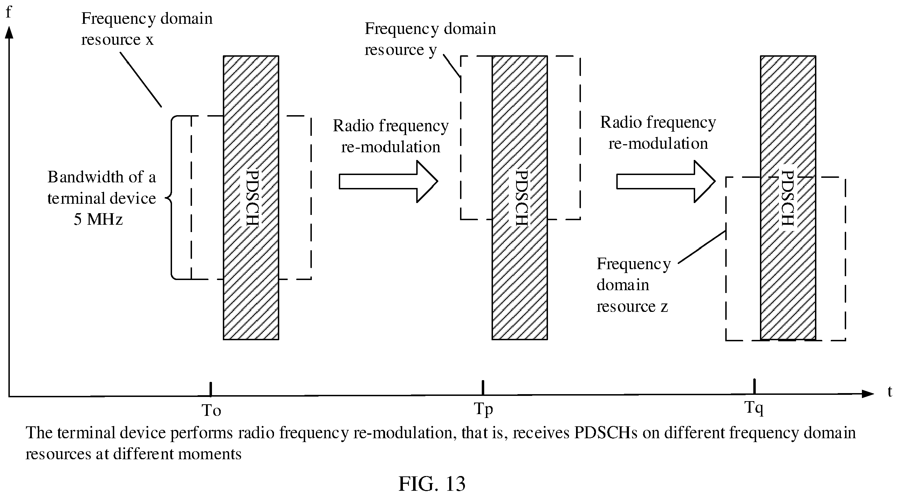

For example, as shown in FIG. 13, the maximum bandwidth of the terminal device is less than the PDSCH bandwidth. The terminal device may receive the PDSCH on a frequency domain resource x at a moment To, receive the PDSCH on a frequency domain resource y at a moment Tp, ..., and receive the PDSCH on a frequency domain resource z at a moment Tq. A union set of the frequency domain resource x, the frequency domain resource y, ..., and the frequency domain resource z may include at least all frequency domain resources of the PDSCH. In this case, the terminal device may receive complete information carried on the PDSCH, to improve PDSCH demodulation performance.

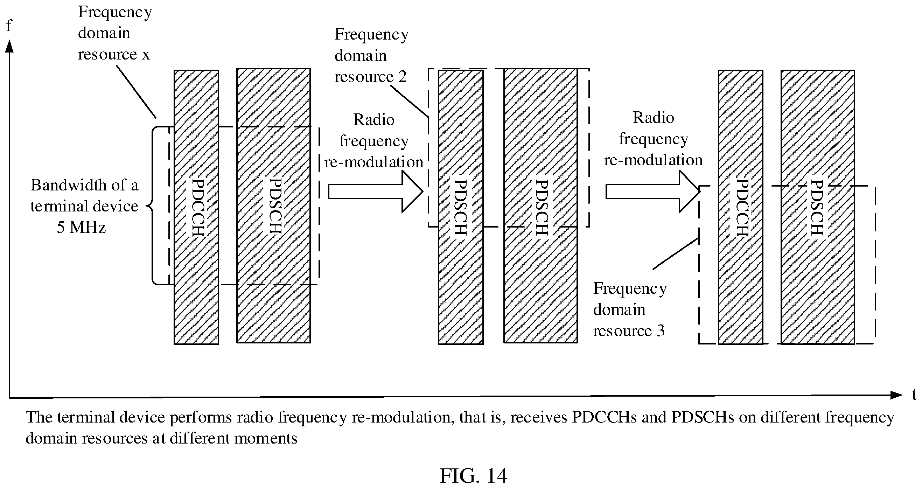

In an implementation, the terminal device may separately receive the PDCCH and the PDSCH through frequency hopping. To be specific, when receiving the PDCCH and the PDSCH through frequency hopping for a time, the terminal device receives only the PDCCH or only the PDSCH within a corresponding frequency resource range. Refer to FIG. 12 and FIG. 13. In another implementation, the terminal device may jointly receive the PDCCH and the PDSCH through frequency hopping. To be specific, when receiving the PDCCH and the PDSCH through frequency hopping for a time, the terminal device receives both the PDCCH and the PDSCH in a corresponding frequency resource range. As shown in FIG. 14, the maximum bandwidth of the terminal device is 5 MHz, and is less than the CORESET bandwidth. The terminal device may start to receive the PDCCH and the PDSCH on a frequency domain resource 1 at a moment T1, start to receive the PDCCH and the PDSCH on a frequency domain resource 2 at a moment T2, ..., and start to receive the PDCCH and the PDSCH on a frequency domain resource n at a moment Tn.

According to the foregoing implementation provided in this application, the terminal device may implement, through radio frequency re-modulation, frequency hopping on different frequency resources at different moments, to receive some different downlink signals or downlink channels, and then perform combination processing based on the some different received downlink signals or downlink channels, to obtain all information carried or transmitted by the downlink signal or the downlink channel. This effectively improves demodulation performance of the downlink signal or the downlink channel of a narrowband terminal device.

In addition, for the narrowband terminal device (or in a scenario in which the terminal device is in a narrowband bandwidth configuration due to power consumption reduction), a transmission bandwidth of an uplink signal or an uplink channel may be greater than the maximum bandwidth of the terminal device. In this case, the terminal device cannot completely send the complete uplink channel or the complete uplink signal, and the network device cannot receive the complete uplink channel or the complete uplink signal. Consequently, transmission performance of the uplink channel or the uplink signal deteriorates.

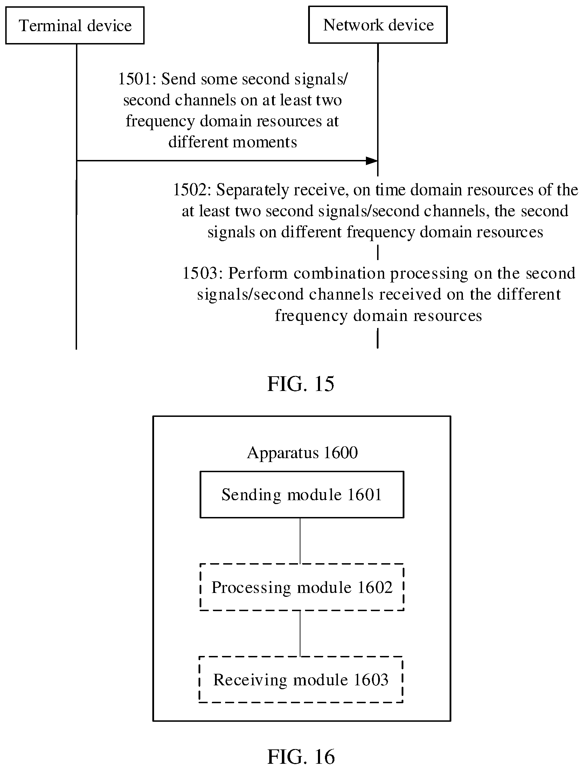

Based on this, this application further provides an uplink channel or uplink signal transmission method. With reference to the communication system shown in FIG. 3 and the communication apparatus shown in FIG. 4, as shown in FIG. 15, the method may include the following steps.

1501: A terminal device sends some second signals/second channels on at least two frequency domain resources at different moments.

The at least two second signals/second channels carry same information.

It should be noted that, that the at least two second signals/second channels carry same information specifically means that information or bits, before coding, that are carried on the at least two second signals/second channels are the same, and/or bits or information, after coding, that is carried on the at least two second signals/second channels is the same. In an implementation, before sending the at least two second signals/second channels, the terminal device performs coding and rate matching on information carried on the second channels, where rate matching is performed based on a resource included in a complete bandwidth of the second signal/second channel. Further, after processing such as scrambling and modulation is performed on the obtained coding bits, the coding bits are mapped to time-frequency resources of the second channels. Because a maximum channel bandwidth of the terminal device is less than the bandwidth of the second signal/second channel, when sending the second signals/second channels, the terminal device may send only coding bits carried on some frequency domain resources corresponding to the second signals/second channels, that is, send the some second signals/second channels on different frequency domain resources.

In an implementation, the maximum channel bandwidth of the terminal device is less than a bandwidth of any one of the at least two second signals/second channels. When the maximum channel bandwidth of the terminal device is less than the bandwidth of the second signal/second channel, the terminal device may separately send the some second signals/second channels on different frequency domain resources of the second signals/second channels at different moments.

The second channel is an uplink channel, and may specifically include at least one of a physical uplink control channel (Physical Uplink Control Channel, PUCCH), a physical uplink shared channel (Physical Uplink Shared Channel, PUSCH), a physical random access channel (Physical Random Access Channel, PRACH), or the like.

The second signal is an uplink signal, and may specifically include an uplink reference signal, for example, at least one of an uplink demodulation reference signal DMRS, a sounding reference signal (Sounding reference signal, SRS), or the like.

In other words, the terminal device may send, by using a frequency hopping transmission method on time domain resources of the uplink channel or the uplink signal, the uplink channel or the uplink signal on different frequency domain resources at different moments. For example, the maximum bandwidth of the terminal device is 5 MHz, and is less than a PUCCH bandwidth. The terminal device may send the PUCCH on a frequency domain resource 1 at a moment T1, send the PUCCH on a frequency domain resource 2 at a moment T2, ..., and send the PUCCH on a frequency domain resource n at a moment Tn. n is greater than or equal to 2.

In an implementation, a union set of the at least two different frequency domain resources may include at least all frequency domain resources of the PUCCH. In this case, the terminal device may completely send information carried on the PUCCH, to optimize PUCCH transmission performance to a maximum extent. For example, a union set of the frequency domain resource 1, the frequency domain resource 2, ..., and the frequency domain resource n includes at least all frequency domain resources of the PUCCH.

1502: A network device receives the second signals/second channels on time domain resources of the at least two second signals/second channels.

In an implementation, the network device may receive the at least two second signals/second channels on a configured frequency domain resource (a wide bandwidth) of the second signals/second channels, or may receive some second signals/second channels on at least two different frequency domain resources (a narrowbandwidth).

1503: The network device performs combination processing on the second signals/second channels received on the different time domain resources.

The network device may receive the second signals/second channels on the different time domain resources at different moments, and perform combination detection on the second signals/second channels received at the plurality of moments, to improve transmission performance of the uplink signal or the uplink channel.

In an implementation, the network device may notify the terminal device in advance that same information may be carried when a plurality of uplink signals or uplink channels are transmitted, that is, indicate the terminal device to send the uplink signals or the uplink channels through frequency hopping. In this way, the terminal device may send the uplink signals or the uplink channels through frequency hopping, and the network device performs combination decoding on uplink signal data or uplink channel data that is received for a plurality of times, to improve transmission efficiency.

In an implementation, the network device sends second information, where the second information is used to indicate that the terminal device may send at least two second channels on at least two different time domain resources.

In this way, after receiving the second information from the network device, the terminal device may determine at least two different frequency domain resources, perform radio frequency re-modulation, and perform step 1501.

For a specific process of the combination processing, refer to related descriptions in the foregoing implementations. Details are not described herein again.

In addition, the foregoing embodiment of this application is further applicable to a sidelink (Sidelink, SL) scenario, namely, a scenario in which different terminal devices communicate with each other.

For example, a first terminal is a normal terminal device, and a second terminal is a narrowband terminal device. In this case, a scenario in which the first terminal sends a signal to the second terminal through a sidelink is applicable to the embodiment in FIG. 11. To be specific, the second terminal may implement, through radio frequency re-modulation, frequency hopping on different frequency resources at different moments, to receive some transmission signals and perform combination processing, to demodulate the complete signal, so that sidelink demodulation performance of the narrowband terminal device may be effectively improved. For example, a first terminal is a narrowband terminal device, and a second terminal is a normal terminal device. In this case, a scenario in which the first terminal sends data to the second terminal through a sidelink is applicable to the embodiment described in FIG. 15. To be specific, the first terminal may implement, through radio frequency re-modulation, frequency hopping on different frequency resources at different moments, to send some transmission signals, and the second terminal perform combination processing on the signals received for a plurality of times, to demodulate the complete signal, so that sidelink demodulation performance of the narrowband terminal device may be effectively improved. For a specific implementation process, refer to descriptions in the foregoing embodiments. This is not specifically limited in this application.

In an implementation, signals or channels transmitted by different terminal devices through sidelinks mainly include: a physical SL shared channel (Physical Sidelink Shared Channel, PSSCH), a physical SL broadcast channel (Physical Sidelink Broadcast Channel, PSBCH), a physical SL control channel (Physical Sidelink Control Channel, PSCCH), a physical SL feedback channel (Physical Sidelink Feedback Channel, PSFCH), a DMRS, a CSI-RS, a PT-RS, an S-PSS (Sidelink primary synchronization signal), an S-SSS (Sidelink secondary synchronization signal, S-SSS), and the like.

It may be understood that a same step or a step or a message having a same function in embodiments of this application may be mutually referenced in different embodiments.

Based on the foregoing implementations, an embodiment of this application further provides a downlink channel or downlink signal communication apparatus. The apparatus is configured to implement the steps performed by the terminal device in the implementation shown in FIG. 11. With reference to FIG. 10, the apparatus 1000 includes a receiving module 1001 and a processing module 1002.

The receiving module 1001 is configured to separately receive, on time domain resources of at least two first channels, some first channels on different frequency domain resources.

The processing module 1002 is configured to perform combination processing on the some first channels received on the different frequency domain resources.

In an implementation, the at least two first channels carry same information.

In an implementation, a maximum channel bandwidth of the terminal device is less than a bandwidth of any one of the at least two first channels.

In an implementation, the at least two first channels are at least two first PDCCHs, and the at least two first PDCCHs are used to carry same downlink control information DCI for scheduling a system information block SIB.

In an implementation, aggregation levels ALs of the at least two first PDCCHs are the same.

In an implementation, control channel elements CCEs forming the at least two first PDCCHs are the same.

In an implementation, the at least two first channels are at least two first PDSCHs, and the at least two first PDSCHs are used to carry a same system information block SIB.

In an implementation, scheduling information of the two first PDSCHs is carried in downlink control information DCI of a first PDCCH.

In an implementation, scheduling information of the first PDSCH is carried in downlink control information DCI of a second PDCCH, a bandwidth of the second PDCCH is less than or equal to the maximum channel bandwidth of the terminal device, and/or a bandwidth of a control resource set for transmitting the second PDCCH is less than or equal to the maximum channel bandwidth of the terminal device.

In an implementation, the receiving module 1001 is further configured to receive first information from a network device, where the first information is used to indicate that the at least two first channels carry the same information.

In an implementation, the first information is carried in a synchronization signal block SSB, a system information block SIB, radio resource control RRC signaling, a media access control control element MAC CE, downlink control information DCI, or a physical broadcast channel PBCH.

In an implementation, that the first information is carried in a synchronization signal block SSB includes: The first information is carried in a master information block MIB and/or an additional payload of the PBCH.

In an implementation, the processing module 1002 is further configured to determine a frequency domain resource range for receiving each first channel.

In an implementation, the frequency domain resource range includes at least one of a center frequency or an operation bandwidth.

In an implementation, the processing module 1002 is further configured to: determine, according to a preset rule, the frequency domain resource range for receiving each first channel; or determine, based on received configuration signaling, the frequency domain resource range for receiving each first channel.

In an implementation, the processing module 1002 is further configured to determine, based on a coverage level or a signal quality level of a received signal, the frequency domain resource range for receiving each first channel.

In an implementation, the processing module 1002 is further configured to determine, on the basis that a measured reference signal received power RSRP is less than or equal to a preset threshold, the frequency domain resource range for receiving each first channel.

In an implementation, an intersection set of the different frequency domain resources is smallest, and/or a union set of the different frequency domain resources is largest.

In an implementation, the union set of the different frequency domain resources includes at least all frequency domain resources of the first channels.

In an implementation, the processing module 1002 is further configured to: demodulate the at least two received first channels to obtain at least two pieces of demodulation information; and perform channel decoding after combining the at least two pieces of demodulation information, to obtain information carried on the first channels.

In an implementation, the processing module 1002 is further configured to perform channel estimation, channel equalization, demodulation, and channel decoding after combining the at least two received first channels, to obtain the information carried on the first channels.

Correspondingly, this application further provides a downlink channel or downlink signal communication apparatus. The apparatus is configured to implement the steps performed by the network device in the implementation shown in FIG. 11. With reference to FIG. 16, the apparatus 1600 includes a sending module 1601.

The sending module 1601 is configured to send first information, where the first information is used to indicate that at least two first channels carry same information.

The sending module 1601 is further configured to send the at least two first channels on time-frequency resources of the at least two first channels.

In an implementation, the at least two first channels carry the same information.

In an implementation, the at least two first channels are at least two first PDCCHs, and the at least two first PDCCHs are used to carry same downlink control information DCI for scheduling a system information block SIB.

In an implementation, aggregation levels ALs of the at least two first PDCCHs are the same.

In an implementation, control channel elements CCEs forming the at least two first PDCCHs are the same.

In an implementation, the at least two first channels are at least two first PDSCHs, and the at least two first PDSCHs are used to carry a same system information block SIB.

In an implementation, scheduling information of the two first PDSCHs is carried in downlink control information DCI of a first PDCCH.

In an implementation, scheduling information of the first PDSCH is carried in downlink control information DCI of a second PDCCH, a bandwidth of the second PDCCH is less than or equal to a maximum channel bandwidth of a terminal device, and/or a bandwidth of a control resource set for transmitting the second PDCCH is less than or equal to the maximum channel bandwidth of the terminal device.

In an implementation, the first information is carried in a synchronization signal block SSB, a system information block SIB, radio resource control RRC signaling, a media access control control element MAC CE, downlink control information DCI, or a physical broadcast channel PBCH.

In an implementation, that the first information is carried in a synchronization signal block SSB includes: The first information is carried in a master information block MIB and/or an additional payload of the PBCH.

Based on the foregoing implementations, this application further provides an uplink channel or uplink signal communication apparatus. The apparatus is configured to implement the steps performed by the terminal device in the implementation shown in FIG. 15. With reference to FIG. 16, the apparatus 1600 includes a sending module 1601 and a processing module 1602.

The processing module 1602 is configured to determine at least two frequency domain resources, where the at least two frequency domain resources are different.

The sending module 1601 is configured to separately send, on time domain resources of at least two second channels, some second channels on the at least two frequency domain resources at different moments, where the at least two second channels carry same information.

In an implementation, a maximum channel bandwidth of the terminal device is less than a bandwidth of any one of the at least two second channels.

In an implementation, the processing module 1602 is further configured to determine at least one of a center frequency or an operation bandwidth for sending the at least two second channels.

In an implementation, the processing module 1602 is further configured to: determine, according to a preset rule, a frequency domain resource range for sending each second channel; or determine, based on received configuration signaling, a frequency domain resource range for sending each second channel.

In an implementation, the processing module 1602 is further configured to determine, based on a coverage level or a signal quality level of a received signal, the frequency domain resource range for sending each second channel.

In an implementation, the processing module 1602 is further configured to determine, on the basis that a measured reference signal received power RSRP is less than or equal to a preset threshold, the frequency domain resource range for sending each second channel.

In an implementation, an intersection set of the at least two frequency domain resources is smallest, and/or a union set of the at least two frequency domain resources is largest.

In an implementation, the union set of the at least two frequency domain resources includes at least all frequency domain resources of the second channels.

In an implementation, the communication apparatus further includes a receiving module 1603, and the receiving module 1603 is configured to receive second information from a network device, where the second information is used to indicate that the at least two second channels carry same information.

Correspondingly, this application further provides an uplink channel or uplink signal communication apparatus. The apparatus is configured to implement the steps performed by the network device in the implementation shown in FIG. 15. With reference to FIG. 16, the apparatus 1600 includes a sending module 1601, a processing module 1602, and a receiving module 1603.

The sending module 1601 is configured to send second information, where the second information is used to indicate a terminal device to send at least two second channels on at least two different time domain resources.

The receiving module 1603 is configured to separately receive the at least two second channels on the at least two different time domain resources, where the at least two second channels carry same information.

The processing module 1602 is configured to perform combination processing on the second channels received on the different time domain resources.

In an implementation, the processing module 1602 is further configured to: demodulate the at least two received second channels to obtain at least two pieces of demodulation information; and perform channel decoding after combining the at least two pieces of demodulation information, to obtain information carried on the second channels.

In an implementation, the processing module 1602 is further configured to perform channel estimation, channel equalization, demodulation, and channel decoding after combining the at least two received second channels, to obtain information carried on the second channels.

It may be understood that when the foregoing communication apparatus is an electronic device, the foregoing sending module or receiving module may be a transceiver, and may include an antenna, a radio frequency circuit, and the like, and the processing module may be a processor, for example, a baseband chip. When the communication apparatus is a component having a function of the terminal device or the network device in the foregoing embodiments, the receiving module may be a radio frequency unit, and the processing module may be a processor. When the communication apparatus is a chip system, the receiving module may be an input interface of the chip system, and the processing module may be a processor of the chip system, for example, a central processing unit (central processing unit, CPU).

It should be noted that, for a specific execution process and embodiment of the communication apparatus 1000 or the communication apparatus 1600, refer to the steps performed by the terminal device or the network device in the foregoing method embodiments and related descriptions. For resolved technical problems and technical effects brought thereof, refer to the content described in the foregoing embodiments. Details are not described one by one herein again.

In this embodiment, the communication apparatus is presented in a form in which functional modules are obtained through division in an integrated manner. The "module" herein may be a specific circuit, a processor and a memory that execute one or more software or firmware programs, an integrated logic circuit, and/or another device that can provide the foregoing functions. In a simple embodiment, a person skilled in the art may figure out that the communication apparatus may be in the form shown in FIG. 4.

For example, functions/implementation processes of the processing module in FIG. 10 may be implemented by the processor 401 in FIG. 4 by invoking the computer program instructions stored in the memory 404. For example, functions/implementation processes of the receiving module 1001 in FIG. 10 may be implemented by the communication interface 403 in FIG. 4, and functions/implementation processes of the processing module 1002 may be implemented by the processor 401 in FIG. 4 by invoking the computer-executable instructions stored in the memory 404.

In an example embodiment, a computer-readable storage medium including instructions is further provided. The instructions may be executed by the processor 401 or the processor 407 of the communication apparatus 400 to complete the downlink channel or downlink signal transmission method in the foregoing embodiments, or perform the uplink channel or uplink signal transmission method. Therefore, for technical effects that can be achieved by the computer-readable storage medium, refer to the foregoing method embodiments. Details are not described herein again.

All or some of the foregoing embodiments may be implemented by software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses.

A person skilled in the art can easily figure out another implementation solution of this application after considering the specification and practicing the present invention that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application.

In conclusion, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A physical broadcast channel PBCH receiving method, applied to a terminal device, wherein the method comprises:
separately receiving, on time domain resources of at least two physical broadcast channels PBCHs, the PBCHs on different frequency domain resources, wherein frequency domain resources of the at least two PBCHs are the same; and
performing combination processing on the PBCHs received on the different frequency domain resources.

2. The method according to claim 1, wherein the frequency domain resources of the at least two PBCHs are in one periodicity, and different PBCHs carry same information.

3. The method according to claim 1 or 2, wherein the method further comprises:
determining a frequency domain resource range for receiving each PBCH.

4. The method according to claim 3, wherein the frequency domain resource range comprises at least one of a center frequency or an operation bandwidth.

5. The method according to claim 3, wherein the determining a frequency domain resource range for receiving each PBCH specifically comprises:
determining, according to a preset rule, the frequency domain resource range for receiving each PBCH; or
determining, based on received configuration signaling, the frequency domain resource range for receiving each PBCH.

6. The method according to claim 3 or 5, wherein the determining a frequency domain resource range for receiving each PBCH specifically comprises:
determining, based on a coverage level or a signal quality level of a received signal, the frequency domain resource range for receiving each PBCH.

7. The method according to claim 6, wherein the determining, based on a coverage level or a signal quality level of a received signal, the frequency domain resource range for receiving each PBCH specifically comprises:
determining, on the basis that a measured reference signal received power RSRP is less than or equal to a preset threshold, the frequency domain resource range for receiving each PBCH.

8. The method according to any one of claims 1 to 7, wherein an intersection set of the different frequency domain resources is smallest, and/or a union set of the different frequency domain resources is largest.

9. The method according to claim 8, wherein the union set of the different frequency domain resources comprises at least all frequency domain resources of the PBCHs.

10. The method according to any one of claims 1 to 9, wherein the performing combination processing on the PBCHs received on the different frequency domain resources specifically comprises:
demodulating the at least two received PBCHs to obtain at least two pieces of demodulation information; and
performing channel decoding after combining the at least two pieces of demodulation information, to obtain information carried on the PBCHs.

11. The method according to any one of claims 1 to 9, wherein the performing combination processing on the PBCHs received on the different frequency domain resources specifically comprises:
performing channel estimation, channel equalization, demodulation, and channel decoding after combining the at least two received PBCHs, to obtain information carried on the PBCHs.

12. The method according to any one of claims 1 to 11, wherein before the performing combination processing on the PBCHs received on the different frequency domain resources, the method further comprises:
performing time-frequency synchronization processing with a network device based on a primary synchronization signal PSS and a secondary synchronization signal SSS that are comprised in a detected synchronization signal block SSB.

13. A physical broadcast channel PBCH receiving apparatus, wherein the apparatus comprises:
a receiving module, configured to separately receive, on time domain resources of at least two physical broadcast channels PBCHs, the PBCHs on different frequency domain resources, wherein frequency domain resources of the at least two PBCHs are the same; and
a processing module, configured to perform combination processing on the PBCHs received on the different frequency domain resources.

14. The apparatus according to claim 13, wherein the frequency domain resources of the at least two PBCHs are in one periodicity, and different PBCHs carry same information.

15. The apparatus according to claim 13 or 14, wherein the processing module is further configured to determine a frequency domain resource range for receiving each PBCH.

16. The apparatus according to claim 15, wherein the frequency domain resource range comprises at least one of a center frequency or an operation bandwidth.

17. The apparatus according to claim 15, wherein the processing module is specifically further configured to:
determine, according to a preset rule, the frequency domain resource range for receiving each PBCH; or
determine, based on received configuration signaling, the frequency domain resource range for receiving each PBCH.

18. The apparatus according to claim 15 or 17, wherein the processing module is specifically further configured to:
determine, based on a coverage level or a signal quality level of a received signal, the frequency domain resource range for receiving each PBCH.

19. The apparatus according to claim 18, wherein the processing module is specifically further configured to:
determine, on the basis that a measured reference signal received power RSRP is less than or equal to a preset threshold, the frequency domain resource range for receiving each PBCH.

20. The apparatus according to any one of claims 13 to 19, wherein an intersection set of the different frequency domain resources is smallest, and/or a union set of the different frequency domain resources is largest.

21. The apparatus according to claim 20, wherein the union set of the different frequency domain resources comprises at least all frequency domain resources of the PBCHs.

22. The apparatus according to any one of claims 13 to 21, wherein the processing module is specifically configured to:
demodulate the at least two received PBCHs to obtain at least two pieces of demodulation information; and
perform channel decoding after combining the at least two pieces of demodulation information, to obtain information carried on the PBCHs.

23. The apparatus according to any one of claims 13 to 21, wherein the processing module is specifically further configured to:
perform channel estimation, channel equalization, demodulation, and channel decoding after combining the at least two received PBCHs, to obtain information carried on the PBCHs.

24. The apparatus according to any one of claims 13 to 23, wherein the processing module is further configured to:
perform time-frequency synchronization processing with a network device based on a primary synchronization signal PSS and a secondary synchronization signal SSS that are comprised in a detected synchronization signal block SSB.

25. An electronic device, wherein the electronic device comprises:
a processor and a transmission interface, wherein
the processor is configured to execute instructions stored in a memory, to implement the method according to any one of claims 1 to 12.

26. A computer-readable storage medium, wherein the computer-readable storage medium stores instructions; and when the instructions are executed by a computer or a processor, the computer or the processor is enabled to perform the method according to any one of claims 1 to 12.

27. A computer program product, wherein the computer program product may comprise program instructions; and when the computer program product runs on a computer, the computer is enabled to perform the method according to any one of claims 1 to 12.

28. A downlink channel transmission method, applied to a terminal device, wherein the method comprises:
separately receiving, on time domain resources of at least two first channels, some first channels on different frequency domain resources; and
performing combination processing on the some first channels received on the different frequency domain resources.

29. The method according to claim 28, wherein the at least two first channels carry same information.

30. The method according to claim 28 or 29, wherein a maximum channel bandwidth of the terminal device is less than a bandwidth of any one of the at least two first channels.

31. The method according to any one of claims 28 to 30, wherein the at least two first channels are at least two first PDCCHs, and the at least two first PDCCHs are used to carry same downlink control information DCI for scheduling a system information block SIB.

32. The method according to claim 31, wherein aggregation levels ALs of the at least two first PDCCHs are the same.

33. The method according to claim 31 or 32, wherein control channel elements CCEs forming the at least two first PDCCHs are the same.

34. The method according to any one of claims 28 to 30, wherein the at least two first channels are at least two first PDSCHs, and the at least two first PDSCHs are used to carry a same system information block SIB.

35. The method according to claim 34, wherein scheduling information of the first PDSCH is carried in downlink control information DCI of a first PDCCH.

36. The method according to claim 34, wherein scheduling information of the first PDSCH is carried in downlink control information DCI of a second PDCCH, a bandwidth of the second PDCCH is less than or equal to the maximum channel bandwidth of the terminal device, and/or a bandwidth of a control resource set for transmitting the second PDCCH is less than or equal to the maximum channel bandwidth of the terminal device.

37. The method according to any one of claims 28 to 36, wherein the method further comprises:
receiving first information from a network device, wherein the first information indicates that the at least two first channels carry the same information.

38. The method according to claim 37, wherein the first information is carried in a synchronization signal block SSB, a system information block SIB, radio resource control RRC signaling, a media access control control element MAC CE, downlink control information DCI, or a physical broadcast channel PBCH.

39. The method according to claim 38, wherein that the first information is carried in a synchronization signal block SSB comprises: the first information is carried in a master information block MIB and/or an additional payload of the PBCH.

40. The method according to any one of claims 28 to 39, wherein the method further comprises:
determining a frequency domain resource range for receiving each first channel.

41. The method according to claim 40, wherein the frequency domain resource range comprises at least one of a center frequency or an operation bandwidth.

42. The method according to claim 40 or 41, wherein the determining a frequency domain resource range for receiving each first channel specifically comprises:
determining, according to a preset rule, the frequency domain resource range for receiving each first channel; or
determining, based on received configuration signaling, the frequency domain resource range for receiving each first channel.

43. The method according to any one of claims 40 to 42, wherein the determining a frequency domain resource range for receiving each first channel specifically comprises:
determining, based on a coverage level or a signal quality level of a received signal, the frequency domain resource range for receiving each first channel.

44. The method according to claim 43, wherein the determining, based on a coverage level or a signal quality level of a received signal, the frequency domain resource range for receiving each first channel specifically comprises:
determining, on the basis that a measured reference signal received power RSRP is less than or equal to a preset threshold, the frequency domain resource range for receiving each first channel.

45. The method according to any one of claims 28 to 44, wherein an intersection set of the different frequency domain resources is smallest, and/or a union set of the different frequency domain resources is largest.

46. The method according to claim 45, wherein the union set of the different frequency domain resources comprises at least all frequency domain resources of the first channels.

47. The method according to any one of claims 28 to 46, wherein the performing combination processing on the some first channels received on the different frequency domain resources specifically comprises:
demodulating the at least two received first channels to obtain at least two pieces of demodulation information; and
performing channel decoding after combining the at least two pieces of demodulation information, to obtain information carried on the first channels.

48. The method according to any one of claims 28 to 47, wherein the performing combination processing on the some the first channels received on the different frequency domain resources specifically comprises:
performing channel estimation, channel equalization, demodulation, and channel decoding after combining the at least two received first channels, to obtain the information carried on the first channels.

49. A downlink channel transmission method, applied to a network device, wherein the method comprises:
sending first information, wherein the first information indicates that at least two first channels carry same information; and
sending the at least two first channels on time-frequency resources of the at least two first channels.

50. The method according to claim 49, wherein the at least two first channels carry the same information.

51. The method according to claim 49 or 50, wherein the at least two first channels are at least two first PDCCHs, and the at least two first PDCCHs are used to carry same downlink control information DCI for scheduling a system information block SIB.

52. The method according to claim 51, wherein aggregation levels ALs of the at least two first PDCCHs are the same.

53. The method according to any one of claims 49 to 52, wherein control channel elements CCEs forming the at least two first PDCCHs are the same.

54. The method according to claim 49 or 50, wherein the at least two first channels are at least two first PDSCHs, and the at least two first PDSCHs are used to carry a same system information block SIB.

55. The method according to claim 54, wherein scheduling information of the first PDSCH is carried in downlink control information DCI of a first PDCCH.

56. The method according to claim 54, wherein scheduling information of the first PDSCH is carried in downlink control information DCI of a second PDCCH, a bandwidth of the second PDCCH is less than or equal to a maximum channel bandwidth of a terminal device, and/or a bandwidth of a control resource set for transmitting the second PDCCH is less than or equal to the maximum channel bandwidth of the terminal device.

57. The method according to any one of claims 49 to 56, wherein the first information is carried in a synchronization signal block SSB, a system information block SIB, radio resource control RRC signaling, a media access control control element MAC CE, downlink control information DCI, or a physical broadcast channel PBCH.

58. The method according to claim 57, wherein that the first information is carried in a synchronization signal block SSB comprises: the first information is carried in a master information block MIB and/or an additional payload of the PBCH.

59. An uplink channel transmission method, applied to a terminal device, wherein the method comprises:
determining at least two frequency domain resources, wherein the at least two frequency domain resources are different; and
separately sending, on time domain resources of at least two second channels, some second channels on the at least two frequency domain resources at different moments, wherein the at least two second channels carry same information.

60. The method according to claim 59, wherein a maximum channel bandwidth of the terminal device is less than a bandwidth of any one of the at least two second channels.

61. The method according to claim 59 or 60, wherein the determining at least two frequency domain resources specifically comprises:
determining at least one of a center frequency or an operation bandwidth for sending the at least two second channels.

62. The method according to any one of claims 59 to 61, wherein the determining at least two frequency domain resources specifically comprises:
determining, according to a preset rule, a frequency domain resource range for sending each second channel; or
determining, based on received configuration signaling, a frequency domain resource range for sending each second channel.

63. The method according to any one of claims 59 to 62, wherein the determining at least two frequency domain resources specifically comprises:
determining, based on a coverage level or a signal quality level of a received signal, the frequency domain resource range for sending each second channel.

64. The method according to claim 63, wherein the determining, based on a coverage level or a signal quality level of a received signal, the frequency domain resource range for sending each second channel specifically comprises:
determining, on the basis that a measured reference signal received power RSRP is less than or equal to a preset threshold, the frequency domain resource range for sending each second channel.

65. The method according to any one of claims 59 to 64, wherein an intersection set of the at least two frequency domain resources is smallest, and/or a union set of the at least two frequency domain resources is largest.

66. The method according to claim 65, wherein the union set of the at least two frequency domain resources comprises at least all frequency domain resources of the second channels.

67. The method according to any one of claims 59 to 66, wherein the method further comprises:
receiving second information from a network device, wherein the second information indicates that the at least two second channels carry the same information.

68. An uplink channel transmission method, applied to a network device, wherein the method comprises:
sending second information, wherein the second information indicates a terminal device to send at least two second channels on at least two different time domain resources;
separately receiving the at least two second channels on the at least two different time domain resources, wherein the at least two second channels carry same information; and
performing combination processing on the second channels received on the different time domain resources.

69. The method according to claim 68, wherein the performing combination processing on the second channels received on the different time domain resources specifically comprises:
demodulating the at least two received second channels to obtain at least two pieces of demodulation information; and
performing channel decoding after combining the at least two pieces of demodulation information, to obtain information carried on the second channels.

70. The method according to claim 68, wherein the performing combination processing on the second channels received on the different time domain resources specifically comprises:
performing channel estimation, channel equalization, demodulation, and channel decoding after combining the at least two received second channels, to obtain information carried on the second channels.

71. A communication apparatus, configured to perform the method according to any one of claims 28 to 70.

72. An electronic device, wherein the electronic device comprises:
a processor and a transmission interface, wherein
the processor is configured to execute instructions stored in a memory, to implement the method according to any one of claims 28 to 70.

73. A computer-readable storage medium, wherein the computer-readable storage medium stores instructions; and when the instructions are executed by a computer or a processor, the computer or the processor is enabled to perform the method according to any one of claims 28 to 70.

74. A computer program product, wherein the computer program product may comprise program instructions; and when the computer program product runs on a computer, the computer is enabled to perform the method according to any one of claims 28 to 70.
